# EUROPEAN PATENT APPLICATION

(11) **EP 4 778 709 A1**
(43) Date of publication of application: **22.07.2026**
(21) Application number: 25211397.2
(22) Date of filing: 27.10.2025
(51) Int. Cl.: B29C 70/44, B29C 33/50, B29C 43/36

(54) **PORTABLE FABRICATION SYSTEMS AND METHODS USING EXPANDABLE TOOLING**

(30) Priority: 17.01.2025 US 202519027851
(71) Applicant: The Boeing Company, Arlington, VA 22202 (US)
(72) Inventor: Wang, Xiaoxi, Arlington, VA, 22202 (US); Seebergh, Jill E., Arlington, VA, 22202 (US)
(74) Representative: Hoffmann Eitle

(57) **Abstract**

A system (100) for fabricating a workpiece (200) includes a case (110) that includes an interior volume (112). The case is configured to enclose at least a portion (202) of the workpiece to be fabricated. The system includes an expandable medium (120) disposed within the interior volume between the case and at least the portion of the workpiece. The expandable medium is configured to expand within the case such that the expandable medium applies positive pressure (102) to at least the portion of the workpiece enclosed by the case.

## Description

### FIELD

The present disclosure relates generally to material fabrication and, more particularly, to portable fabrication systems and methods using expandable tooling.

### BACKGROUND

Engineered materials, such as composite materials, are used in many applications. For many manufactured components, the fabrication process includes bonding, curing, or other processing operations that typically require elevated temperatures and pressures. Industrial autoclaves are often used for these processes, as autoclaves permit the application of both temperature and pressure under controlled conditions. However, processes requiring an autoclave can lead to bottlenecks in the manufacturing process, because throughput is dependent upon the capacity of the autoclave and requires transport of raw materials or uncured components to the autoclave and subsequent transport of the cured composite from the autoclave. Additionally, autoclave processing is not typically available for spot processing, repair, and remote processing needs. Accordingly, those skilled in the art continue with research and development efforts in material fabrication.

### SUMMARY

Disclosed are examples of a system for portable fabrication, a method for fabricating a workpiece, and a portable fabrication kit. The following is a non-exhaustive list of examples, which may or may not be claimed, of the subject matter according to the present disclosure.

In an example, the disclosed system includes a case that includes an interior volume. The case is configured to enclose at least a portion of a workpiece to be fabricated. The system includes an expandable medium disposed within the interior volume between the case and at least the portion of the workpiece. The expandable medium is configured to expand within the case such that the expandable medium applies positive pressure to at least the portion of the workpiece enclosed by the case.

In an example, the disclosed method includes steps of: (1) enclosing at least a portion of the workpiece in an interior volume of a case; (2) applying an expandable medium in the interior volume between the case and at least the portion of the workpiece; (3) expanding the expandable medium; (4) applying a positive pressure to at least the portion of the workpiece; and (5) processing the workpiece in response to applying the positive pressure.

In an example, the disclosed portable fabrication kit includes a case including an interior volume and configured for enclosing at least a portion of a workpiece to be fabricated. The kit includes an expandable medium. The expandable medium is configured to be applied in the interior volume between the case and at least the portion of the workpiece. The expandable medium is configured to expand for applying a positive pressure to at least the portion of the workpiece enclosed by the case.

Other examples of the system, the method, and the portable fabrication kit will become apparent from the following detailed description, the accompanying drawings, and the appended claims.

### BRIEF DESCRIPTION OF THE DRAWINGS

Fig. 1 is a schematic block diagram of an example of a system for fabricating a workpiece;
Fig. 2 is a flow diagram of an example of a method for fabricating a workpiece;
Fig. 3 is a schematic illustration of an example of the system, depicting a workpiece and expandable medium applied within in a case;
Fig. 4 is a schematic illustration of the example of the system shown in Fig. 3, depicting the expandable medium in an unexpanded state;
Fig. 5 is a schematic illustration of the example of the system shown in Fig. 4, depicting the expandable medium in an expanded state;
Fig. 6 is a schematic illustration of an example of the case of the system;
Fig. 7 is a schematic illustration of an example of the case and a portion of the workpiece;
Fig. 8 is a schematic illustration of an example of the system, depicting the workpiece and the expandable medium in the expanded state within the case;
Fig. 9 is a schematic illustration of an example of the system, depicting the workpiece and the expandable medium in the expanded state with the case utilizing movable sides to modify an interior volume;
Fig. 10 is a schematic illustration of an example of the system, depicting the case and a second case coupled together to modify the interior volume and accommodate the workpiece;
Fig. 11 is a schematic illustration of an example of the system, depicting the workpiece on a forming tool and the expandable medium in the unexpanded state within the case;
Fig. 12 is a schematic illustration of the example of the system shown in Fig. 11, depicting the expandable medium in the expanded state;
Fig. 13 is a schematic illustration of an example of the system, depicting the workpiece, a casting, and the expandable medium in the unexpanded state within the case;
Fig. 14 is a schematic illustration of the example of the system shown in Fig. 13, depicting the expandable medium in the expanded state;
Fig. 15 is a schematic illustration of an example of the system, depicting the workpiece, an overlay, and the expandable medium in the unexpanded state within the case;
Fig. 16 is a schematic illustration of the example of the system shown in Fig. 15, depicting the expandable medium in the expanded state;
Fig. 17 is a schematic illustration of an example of the system, depicting the workpiece and encapsulating elements containing the expandable medium in the unexpanded state within the case;
Fig. 18 is a schematic illustration of the example of the system shown in Fig. 17, depicting the expandable medium in the expanded state;
Fig. 19 is a schematic illustration of an example of the system, depicting the workpiece, volumetrically variant elements, volumetrically invariant elements, and the expandable medium in the expanded state within the case;
Fig. 20 is a schematic illustration of an example of a portable fabrication kit;
Fig.21 is a schematic illustration of an example of an aircraft; and
Fig. 22 is a flow diagram of an example of an aircraft manufacturing and service method.

### DETAILED DESCRIPTION

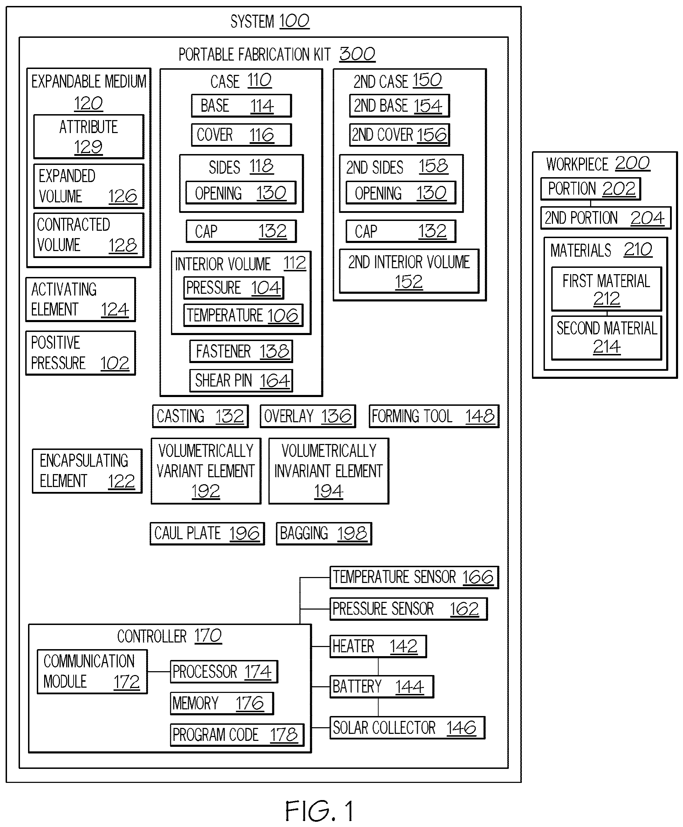

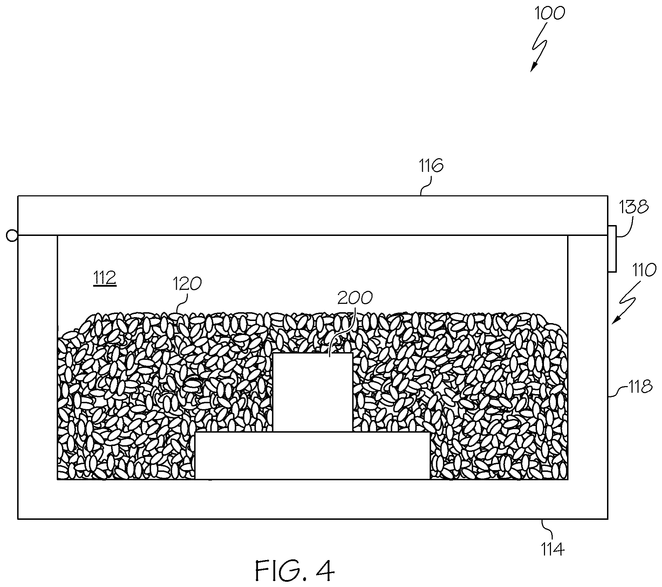

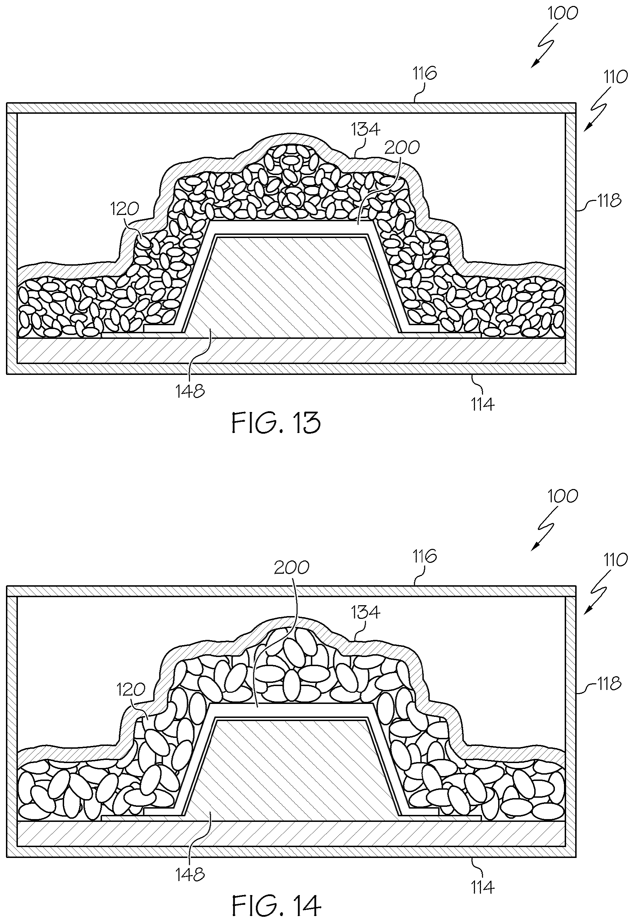

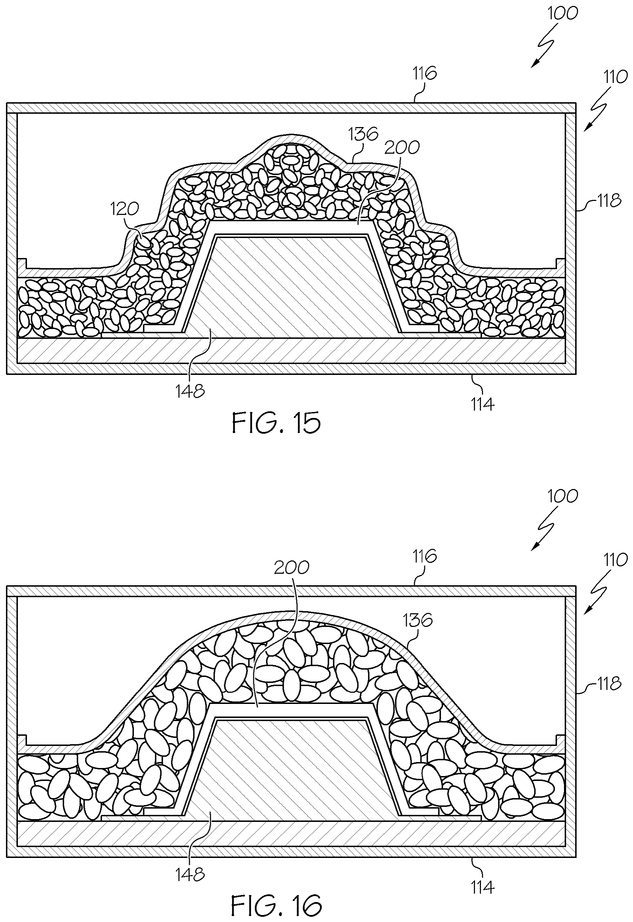

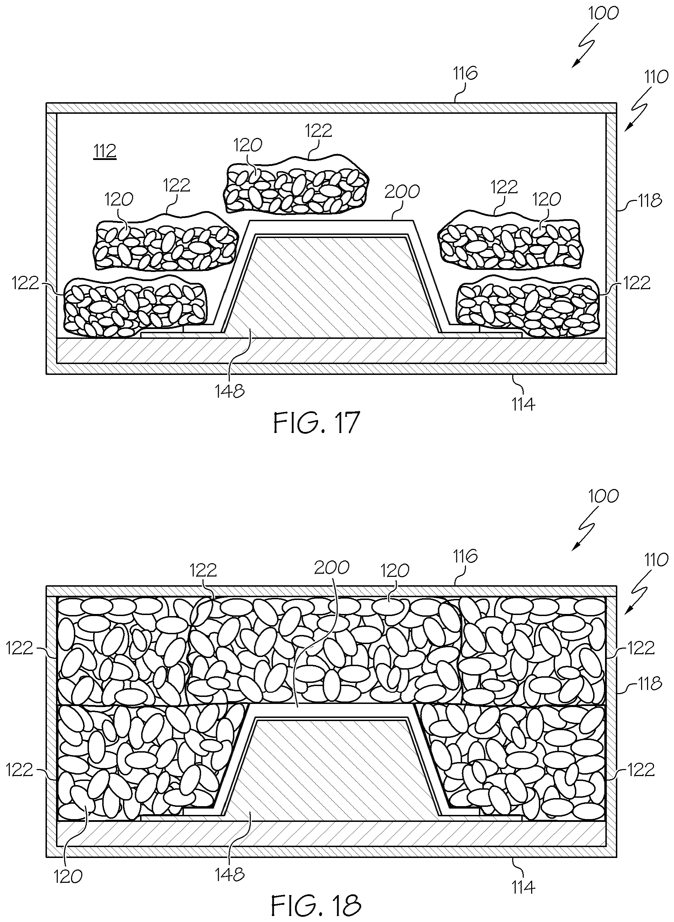

Referring now to Figs. 1 and 3-19, by way of examples, the present disclosure is directed to a system 100 for portable fabrication. The following are examples of the system 100, according to the present disclosure. Examples of the system 100 include a number of elements, features, and components. Not all of the elements, features, and/or components described or illustrated in one example are required in that example. Some or all of the elements, features, and/or components described or illustrated in one example can be combined with other examples in various ways without the need to include other elements, features, and/or components described in those other examples, even though such combination or combinations are not explicitly described or illustrated by example herein.

Examples of the system 100 utilize portable and modular constraining containers, expandable materials, and associated components that enable out-of-autoclave fabrication for high-quality processed parts. Examples of the system 100 advantageously facilitate the application of omnidirectional and at least approximately uniform pressure on surfaces of components to be processed. Examples of the system 100 advantageously enable the use of expandable materials for structural bonding, debulking, and curing, with or without adhesives. Examples of the system 100 advantageously enable material processing in locations where such processing would otherwise be unavailable.

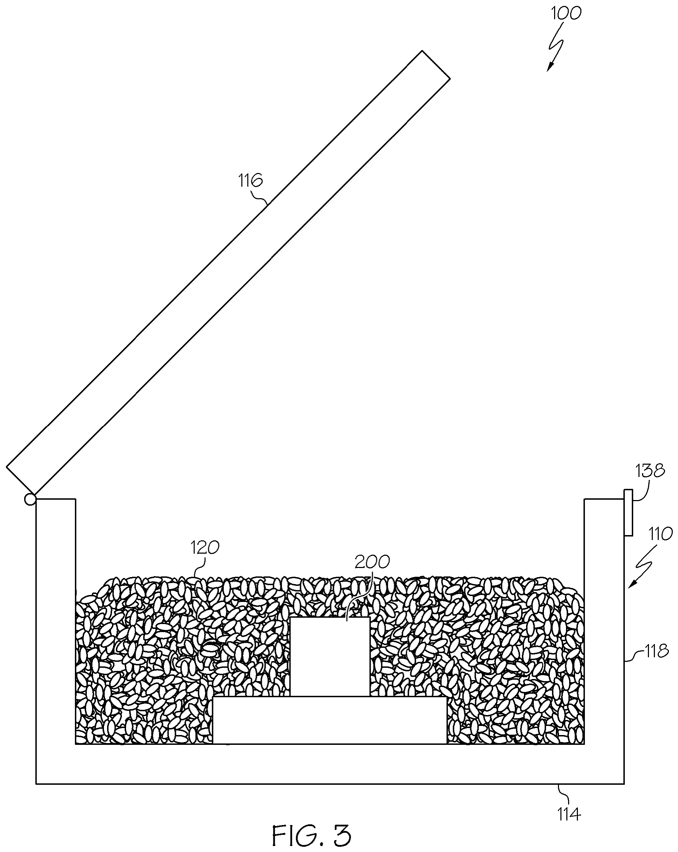

Figs. 3-5 and 7-19 illustrate various examples of the system 100 depicted in use to process at least a portion 202 of a workpiece 200. Generally, the portion 202 of the workpiece 200 refers to any portion or an entirely of the workpiece 200 to be processed using the system 100.

As illustrated in Fig. 1, in one or more examples, the workpiece 200 includes one or more materials 210, such as a first material 212 and a second material 214. In some examples, the materials 210 are the same. In some examples, the materials 210 are different. In one or more examples, the workpiece 200 can also include any other number of materials 210, including base materials, material layers, components, accessories, and the like, which are to be bonded together during the material processing operation. In one or more examples, one or more of the materials 210 is a composite material (e.g., composite component, part, object, etc.) that includes one or more composite layers (also called plies). In one or more examples, one or more of the materials 210 is a metallic material (e.g., metallic component, part, object, etc.). In one or more examples, one or more of the materials 210 is a ceramic material (e.g., ceramic component, part, object, etc.). In one or more examples, one or more of the materials 210 is a polymeric material (e.g., polymeric component, part, object, etc.).

Figs. 3-5 and 7-19 illustrate various examples of the workpiece 200 and examples of the materials 210 that are to be processed or bonded together using the system 100 and/or according to the method 1000. The workpiece 200 can include any suitable number of the materials 210 (e.g., material types, material layers, material portions, material components or parts, etc.). In various examples, the workpiece 200 includes one or more composite materials, metallic materials, ceramic materials, polymer materials, thermoplastic materials, thermosetting materials, fiber reinforcement materials, and/or any other suitable materials depending on the desired properties for the bonded structure.

In any of these examples, the materials 210 are processed using the system 100 and/or according to the method 1000. In one or more examples, the materials 210 are cured. In one or more examples, the materials 210 are bonded together by co-curing (e.g., with application of heat and/or pressure). In one or more examples, the materials 210 are bonded together by co-bonding (e.g., with application of heat and/or pressure). In one or more examples, the materials 210 are bonded together by secondary bonding (e.g., with application of heat and/or pressure).

The workpiece 200 can have any suitable one of various different cross-sectional geometries. The materials 210 include a number of material layers (e.g., uncured composite materials, cured composite materials, metallic materials, ceramic materials, polymer materials, thermoplastic materials, thermosetting materials, fiber reinforcement materials, etc.) and, optionally, adhesive layers, that are bonding together using expansion of an expandable medium 120 to apply positive pressure 102 to the workpiece 200. In one or more examples, the workpiece 200 includes a number of layers of the materials 210 (e.g., material layers) that are processed (e.g., cured or bonded together) using expansion of the expandable medium 120 to apply the positive pressure 102 to the workpiece 200.

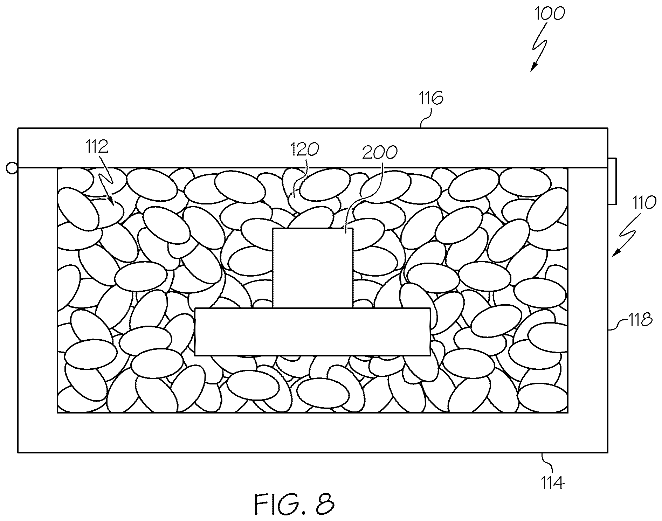

In one or more examples, the expandable medium 120 is situated or positioned relative to the workpiece 200 such that the positive pressure 102 (e.g., an omni-directional force) is applied to at least one side or surface of the workpiece 200. As illustrated in Figs. 3-5, in one or more examples, a first amount of the expandable medium 120 is positioned over or on the workpiece 200 (e.g., a stack of the material layers) such that expansion of the expandable medium 120 exerts the positive pressure 102 on the workpiece 200 to compress the material layers during processing. As illustrated in Fig. 8, in one or more examples, a first amount of the expandable medium 120 is positioned over or on the workpiece 200 and a second amount of the expandable medium 120 is positioned under or below the workpiece 200 such that expansion of the expandable medium 120 exerts the positive pressure 102 on the workpiece 200 to compress the material layers during processing.

As illustrated in Figs. 1 and 3-19, in one or more examples, the system 100 includes a case 110 and an expandable medium 120. The case 110 includes or forms an interior volume 112. The case 110 is configured to enclose at least a portion 202 of a workpiece 200 to be fabricated. The expandable medium 120 disposed within the interior volume 112 between the case 110 and at least the portion 202 of the workpiece 200. The expandable medium 120 is configured to expand within the case 110 such that the expandable medium 120 applies positive pressure 102 to at least the portion 202 of the workpiece 200 enclosed by the case 110. In one or more examples, the case 110 includes a base 114, a cover 116, and a plurality of sides 118. The sides 118 extend between the base 114 and the cover 116. The base 114, the cover 116, and the sides 118 form the interior volume 112.

In one or more examples, the case 110 serves as a portable and modular space constraining container or tooling that encloses at least a portion (e.g., portion 202) of the workpiece 200, which is being processed (e.g., fabricated, repaired, bonded, etc.). Portability and modularity of the case 110 advantageously enables workpiece fabrication and/or material processing in otherwise unavailable locations. In one or more examples, the case 110 is configured (e.g., sized and shaped) to contain and/or enclose an entirety of the workpiece 200 being processed. In one or more examples, the case 110 is configured to contain and/or enclose a portion (e.g., less than the entirety) of the workpiece 200 being processed.

As illustrated in Figs. 3-19, in one or more examples, the workpiece 200 is supported on or by the base 114. In one or more examples, the cover 116 is located relative to base 114 and/or the workpiece 200 such that at least the portion 202 of the workpiece 200 and the expandable medium 120 are positioned within or are otherwise constrained by the cover 116 or between the cover 116 and the base 114. In one or more examples, the cover 116 enables the expandable medium 120 and the workpiece 200 to the loaded within the interior volume 112 of the case 110. In one or more examples, the cover 116 has or forms a cross-sectional profile that corresponds to a cross-sectional shape of the workpiece 200. Providing the cover 116 with a cross-sectional profile that corresponds to (e.g., at least approximately matches or is complementary to) the cross-sectional shape of the workpiece 200 facilitates a smaller interior volume 112 of the case 110 and, thus, a reduction in the amount of the expandable medium 120 needed.

In one or more examples, at least a portion of the case 110 is rigid. In one or more examples, at least a portion of the case 110 is flexible and non-expandable. In one or more examples, at least a portion of the case 110 is flexible and expandable. In one or more examples, at least a portion of the case 110 is substantially resistant to expansion, at least when pressure is applied on inner surfaces of the case 110 by the expandable medium 120. In this way pressure applied to an outer surface of the workpiece 200 acts cooperatively with the case 110 to generate compressive force upon the workpiece 200.

In one or more examples, at least a portion of the base 114, the cover 116, and the sides 118 are rigid (e.g., hard or non-flexible) and non-expandable. In these examples, at least a portion of the base 114, the cover 116, and the sides 118 are made out of any suitable material, including, but not limited to, metallic materials, composite materials, cement materials, ceramic materials, polymeric materials, and the like. In these examples, the case 110 constrains the expandable medium 120 and reacts to the positive pressure 102 generated by the expandable medium 120 upon expanding. In these examples, the case 110 is capable of withstanding the pressure generated within the interior volume 112 upon expansion of the expandable medium 120.

In one or more examples, at least a portion of the base 114, the cover 116, and the sides 118 is flexible. In one or more examples, at least a portion of the base 114, the cover 116, and the sides 118 is flexible and non-expandable. In one or more examples, at least a portion of at least one of the base 114, the cover 116, and the sides 118 is flexible and non-expandable or expandable. Providing at least a portion of at least one of the base 114, the cover 116, and the sides 118 as flexible and non-expandable enables the case 110 to form over (e.g., more closely match) the profile shape of at least a portion of the workpiece 200 and/or the expandable medium 120 before expansion of the expandable medium 120 and/or facilitates conforming to the shape of at least a portion of the workpiece 200, resulting in a smaller interior volume 112 of the case 110 and, thus, a reduction in the amount of the expandable medium 120 needed and increasing the portability of the system 100. In these examples, at least a portion of the base 114, the cover 116, and the sides 118 can be made out of any suitable flexible and non-expandable material, including, but not limited to, metallic mesh (e.g., chainmail), ceramic mesh, polymeric mesh, and the like.

In one or more examples, the workpiece 200 (e.g., portion 202) is disposed in the case 110 (e.g., on the base 114) during the processing. In order for suitable compressive forces (e.g., positive pressure 102) to be applied to the workpiece 200 while it is within the case 110, at least the portion 202 of the workpiece 200 being processed may need to be well-supported. In one or more examples, the base 114 provides a substantially non-compressible surface to support one side of the workpiece 200. In other examples, the system 100 includes a forming tool 148. The forming tool 148 is configured to be situated in the interior volume 112. The forming tool 148 is configured to support at least the portion 202 of the workpiece 200. In one or more examples, the forming tool 148 provides the cross-sectional shape for the workpiece 200 (e.g., a mandrel).

In one or more examples, the cover 116 is movable relative to the base 114 between an open state and closed state. In one or more examples, the cover 116 includes any suitable element or feature that facilitates application and/or removal of the expandable medium 120 from the interior volume 112. In one or more examples, the cover 116 includes removable or openable panels (e.g., doors) that enable access to the interior volume 112 and application of expandable medium 120 once positioned relative to the workpiece 200.

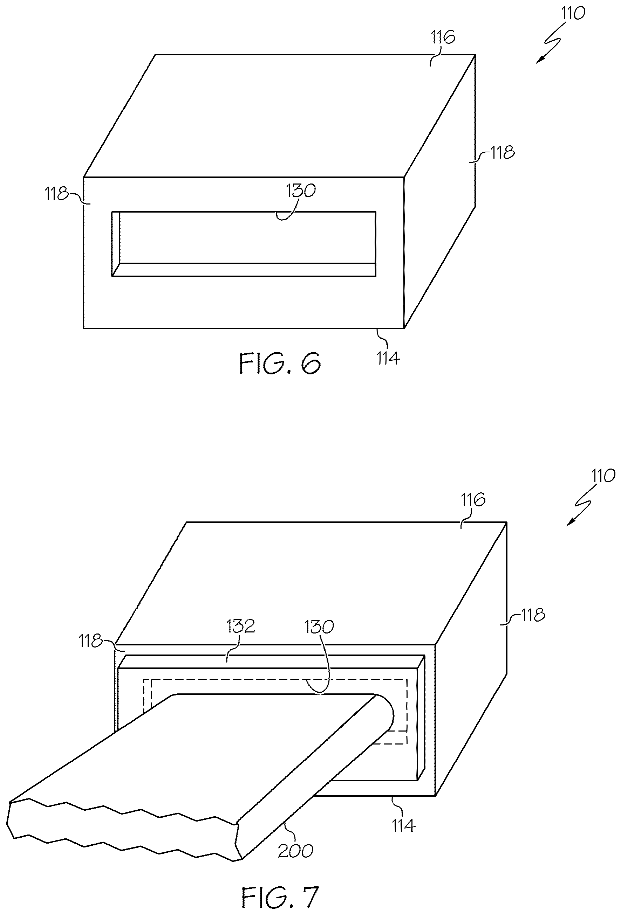

As illustrated in Figs. 6 and 7, in one or more examples, at least one of the sides 118 includes an opening 130. The opening 130 is configured to receive at least the portion 202 of the workpiece 200. As an example, the system 100 is capable of processing (e.g., repairing) particular sections or regions of a large or elongated instance of the workpiece 200. In these examples, the portion 202 of the workpiece 200 is inserted into the interior volume 112 of the case 110 through the opening 130.

In one or more examples, the case 110 includes a cap 132. The cap 132 is configured to at least partially cover the opening 130. In one or more examples, the cap 132 is configured to constrain or hold the expandable medium 120 in the interior volume 112 (e.g., before, during, and/or after expansion of the expandable medium 120. In one or more examples, the cap 132 is configured to fill a portion of the opening 130 between the workpiece 200 and the side 118. In one or more examples, the cap 132 is configured to conform to the workpiece 200 situated in the opening 130.

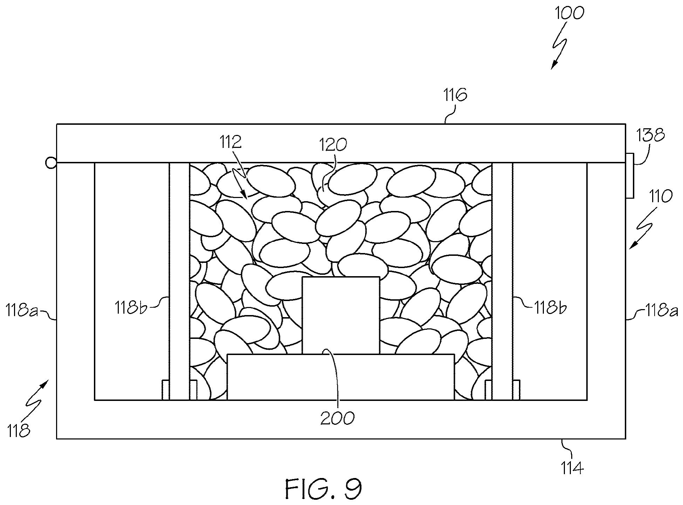

As illustrated in Fig. 9, in one or more examples, the interior volume 112 of the case 110 is selectively (e.g., controllably) variable. In one or more examples, at least one of the sides 118 is movable relative to the base 114 and to the cover 116. Movement of one or more of the sides 118 relative to base 114 and the cover 116 enables selective modification of the interior volume 112, such as size and/or shape of the interior volume 112. Selective modification or variation of the interior volume 112 facilitates a reduction in the interior volume 112 and a corresponding reduction in the amount of expandable medium 120 required to fill the interior volume 112 upon expansion. Selective modification or variation of the interior volume 112 also enables selective or reactive control and modification of the pressure 104 within the case 110 (e.g., within interior volume 112 and acting on the workpiece 200.)

In one or more examples, one or more of the sides 118 is coupled to and releasable from the base 114 and the cover 116. In this way, the interior volume 112 of the case 110 can be customized based on the arrangement of the sides 118. In one or more examples, the sides 118 can be releasably coupled to the base 114 and/or the cover 116 using any one of various mechanisms or techniques, such as tongue and groove connections, fasteners, clamps, and the like. In one or more examples, one or more of the sides 118 have two or more components, such as a primary or outer side 118a and a secondary or inner side 118b. In these examples, the inner side 118b can be moved relative to the outer side 118a to modify the size and/or shape of the interior volume 112.

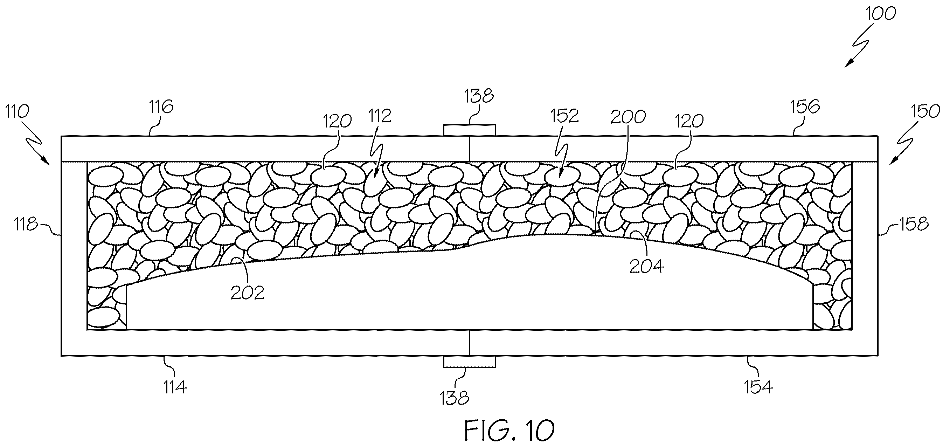

As illustrated in Figs. 1 and 10, in one or more examples, the system 100 includes a second case 150. In one or more examples, the second case 150 is substantially the same as and/or includes substantially the same elements, features, and/or components as the case 110. The second case 150 includes or forms a second interior volume 152. In one or more examples, the second case 150 includes a second base 154 and a second cover 156. The second case 150 is configured to be coupled to the case 110. The second case 150 is configured to enclose a second portion 204 of the workpiece 200. The expandable medium 120 is disposed within the second interior volume 152 between the second case 150 and the second portion 204 of the workpiece 200. While examples of the system 100 including two cases (e.g., case 110 and second case 150) are illustrated in Figs. 1 and 10, in other examples, the system 100 can include any number of cases that are arranged and coupled together in various configurations to accommodate numerous sizes and shapes of different workpieces.

In one or more examples, a portion of the case 110 and a second portion of the second case 150 are removable to place the interior volume 112 and the second interior volume 152 in communication. As an example, one of the sides 118 of the case 110 and one of the second sides 158 of the second case 150 can be removed and the now open sides of the case 110 and the second case 150 can be joined to combine the interior volume 112 and the second interior volume 152 and, thereby, increase overall processing volume of the system 100 to accommodate workpieces 200 having different sizes and shapes. In these examples, the case 110 and the second case 150 are coupled or secured together using any suitable mechanism or technique, such as the fasteners 138.

As illustrated in Figs. 1, 13 and 14, in one or more examples, the system 100 includes a casting 134. The casting 134 is configured to be applied and hardened over the expandable medium 120 and at least the portion 202 of the workpiece 200. The casting 134 and a portion of the case 110 form the interior volume 112. The expandable medium 120 is disposed within the interior volume 112 between the casting 134 and at least the portion 202 of the workpiece 200. The casting 134 is configured to harden and, thereby, enclose at least the portion of the workpiece 200. In one or more examples, the expandable medium 120 is configured to expand such that the expandable medium 120 applies the positive pressure 102 to the workpiece 200 and the casting 134. In one or more examples, the casting 134 is situated or disposed between the expandable medium 120 and a surface of at least the portion 202 of the workpiece 200 being processed. In these examples, the casting 134, upon hardening, provides a pressure leveling mechanism or layer to transfer a potentially non-uniform pressure from the expanding expandable medium 120 to a substantially uniform pressure against the workpiece 200, which facilitates in improved processing and surface quality and/or facilitates improved consolidation. In these examples, expansion of the expandable medium 120 applies or exerts the positive pressure 102 to an exterior of the casting 134 and (e.g., indirectly) to the workpiece 200 via (e.g., through) the casting 134. In one or more examples, the casting 134 is situated or disposed over the expandable medium 120 and at least the portion 202 of the workpiece 200 being fabricated. In these examples, the casting 134 forms at least a portion of the interior volume 112. In these examples, upon hardening, the casting 134 serves as a space constraining container in which a hard casting shell functions as a container wall. As an example, the casting 134 can serve as the cover 116 and/or a portion of the sides 118. In these examples, expansion of the expandable medium 120 applies or exerts positive pressure to an interior of the casting 134 and (e.g., directly) to the workpiece 200. In one or more examples, the system 100 includes more than one layer of the casting 134, such as a first or outer casting and a second or inner casting. The inner casting is situated or disposed between the expandable medium 120 and the workpiece 200 and, upon hardening, provides a pressure leveling mechanism or layer to transfer a potentially non-uniform pressure from the expanding expandable medium 120 to a substantially uniform pressure against the workpiece 200. The outer casting is situated or disposed over the inner casting, the expandable medium 120, and at least the portion 202 of the workpiece 200 and, upon hardening, serves as a portion of a space constraining container in which the hard outer casting shell functions as a container wall.

As illustrated in Figs. 1, 15 and 16, in one or more examples, the system 100 includes an overlay 136. The overlay 136 is configured to be draped over the expandable medium 120 and at least the portion 202 of the workpiece 200 and coupled to the case 110. The overlay 136 and a portion of the case 110 form the interior volume 112. The expandable medium 120 is disposed within the interior volume 112 between the overlay 136 and at least the portion 202 of the workpiece 200. In one or more examples, the overlay 136 forms or defines at least a portion of the interior volume 112. In one or more examples, the overlay 136 takes the place of the cover 116 and/or serves as a portion of the space constraining container that corresponds to the cross-sectional shape or profile of the workpiece 200. In these examples, the expandable medium 120 is disposed within the interior volume 112 formed by the overlay 136 and between the overlay 136 and the workpiece 200. In one or more examples, at least a portion of the overlay 136 is flexible and non-expandable. Use of the overlay 136 enables the space constraining container to be formed over (e.g., more closely match) the profile shape of the workpiece 200 and/or the expandable medium 120 before expansion of the expandable medium 120. In these examples, at least a portion of the overlay 136 can be made out of any suitable material, including, but not limited to, metallic mesh (e.g., chainmail), ceramic mesh, polymeric mesh, and the like. In these examples, the overlay 136 constrains the expandable medium 120 and reacts to the positive pressure 102 generated by the expandable medium 120 upon expanding. In these examples, the overlay 136 is capable of withstanding the pressure generated upon expansion of the expandable medium 120.

As illustrated in Figs. 1, 17 and 18, in one or more examples, the system 100 includes an encapsulating element 122. The encapsulating element 122 is configured to enclose at least a portion (e.g., some amount of) the expandable medium 120. The encapsulating element 122 is disposed within the interior volume 112 between the case 110 and at least the portion 202 of the workpiece 200. In one or more examples, at least some portion of the expandable medium 120 is disposed within the encapsulating element 122. In one or more examples, expandable pellets are disposed in or contained by the encapsulating element 122. In one or more examples, the encapsulating element 122 encloses the expandable medium 120 (e.g., the expandable pellets), thereby better facilitating handling of the expandable medium 120 as well as the removal of the expandable medium 120 after processing is complete. The encapsulating element 122 can take any suitable form, such as an enclosed film, sealed material layer, bag, bladder, and the like. In one or more examples, the encapsulating element 122 is non-expandable. In one or more examples, the encapsulating element 122 is expandable. In one or more examples, the encapsulating element 122 is made of a woven nylon or polyester fabric (e.g., firehose material).

In one or more examples, the system 100 includes an activating element 124. The activating element 124 is configured to initiate at least one of expansion and/or contraction of the expandable medium 120 in the interior volume 112. The type or composition of the element 124 or the mechanism used by the activating element 124 can vary depending on the type or composition of the expandable medium 120. In one or more examples, the activating element 124 is a chemical, water, a heater, and the like.

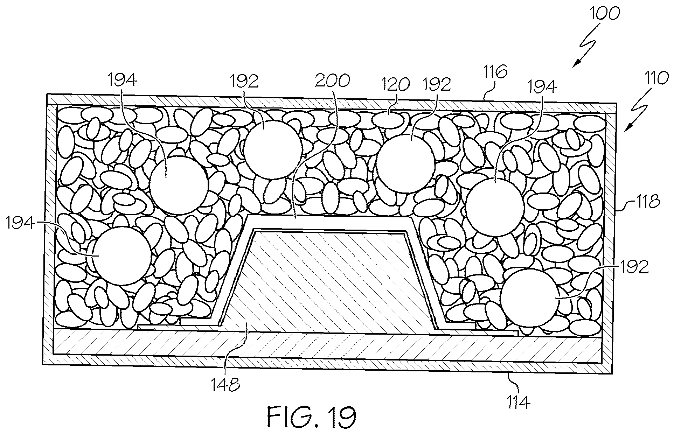

As illustrated in Figs. 1 and 19, in one or more examples, the system 100 includes at least one volumetrically variant element 192. The volumetrically variant element 192 is configured to expand and/or contract within the interior volume 112 to selectively control or modify the interior volume 112 and/or selectively increase and/or decrease the pressure 104 in the case 110. The volumetrically variant element 192 can have any feasible cross-sectional shape, such as circular, elliptical, polygonal, and the like. The volumetrically variant element 192 can be elongated along at least one axis. In one or more examples, the volumetrically variant element 192 is an intermediate layer within the interior volume 112 of the case 110. In one or more examples, the volumetrically variant element 192 includes or takes the form of a bladder or other expandable element. In one or more examples, the volumetrically variant element 192 is filled with a fluid (e.g., gas or liquid) and is configured to equalize the positive pressure 102 applied to the workpiece 200 such that the positive pressure 102 is more uniformly applied. The volumetrically variant element 192 can be selected to be resistant to heat and to be readily removable after the workpiece 200 is fabricated. In one or more examples, the volumetrically variant element 192 is an expandable element or other volume modifying component of the system 100 that is configured to be selectively expanded and/or contracted to selectively decrease or increase the interior volume 112 of the case 110 available to be filled by the expandable medium 120 during expansion of the expandable medium 120. In one or more examples, the volumetrically variant element 192 includes or takes the form of an enclosed bladder or balloon with some type of expandable material (e.g., expandable medium 120). In one or more examples, a chemical (e.g., baking soda powder) can be loaded within the volumetrically variant element 192. After heating the chemical and generating a gas, the volumetrically variant element 192 will expand and decrease the fillable volume of (interior volume 112) of the case 110 and/or apply additional positive pressure 102 in the constrained space. In other examples, the volumetrically variant element 192 is an example of one of the different types of the expandable medium 120 (e.g., the encapsulating element 122). In one or more examples, the volumetrically variant element 192 takes the form of or serves as an intensifier is situated within the interior volume 112 of the case 110 with the expandable medium 120 and the workpiece 200. In one or more examples, the volumetrically variant element 192 is another type or instance of the expandable medium 120 or a different type of expandable material. In one or more examples, the volumetrically variant element 192 is selectively expandable to increase or intensify the pressure applied to the workpiece 200 at one or more locations. As an example, the volumetrically variant element 192 can be positioned proximate (e.g., at or near) a predetermined location or area of the workpiece 200, such as a cavity or contour between different portions of the workpiece 200) such that an intensified pressure is applied to the radius of a contour during fabrication (e.g., curing and/or bonding).

As illustrated in Figs. 1 and 19, in one or more examples, the system 100 includes at least one volumetrically invariant element 194. The volumetrically invariant element 194 is configured to maintain a constant size and volume to fill a portion of the interior volume 112. The volumetrically invariant element 194 can have any feasible cross-sectional shape, such as circular, elliptical, polygonal, and the like. The volumetrically invariant element 194 can be elongated along at least one axis.

As illustrated in Fig. 1, in one or more examples, the system 100 includes a caul plate 196. The caul plate 196 is disposed in the interior volume 112 between the expandable medium 120 and at least the portion of the workpiece 200. In one or more examples, the caul plate 196 is situated between the expandable medium 120 and the workpiece 200. In these examples, the caul plate 196 facilitates improved consolidation and improved surface conditions of the workpiece 200. The caul plate 196 can be selected to be resistant to heat and to be readily removable after the workpiece 200 is fabricated. Examples of materials for the caul plate 196 include a rigid or semi-rigid material, a metallic material, a composite material, and the like. In one or more examples, the caul plate 196 includes or is formed by a plurality of caul sections. In these examples, each one of the caul sections is separate from another one and is movable (e.g., capable of shifting or sliding) relative to an adjacent one of the caul sections. In one or more examples, the ends of adjacent ones of the caul sections overlap. The separate caul sections of the caul plate 196 facilitate improved consolidation and surface condition.

As illustrated in Fig. 1, in one or more examples, the system 100 includes bagging 198. The bagging 198 is disposed over at least the portion of the workpiece 200. In one or more examples, the bagging 198 includes or takes the form of vacuum bagging, vacuum lamination bagging, or other sheet material that uses atmospheric pressure to clamp and hold the components of the workpiece 200 in place under the bagging 198 during the fabrication process.

As illustrated in Figs. 1, 3-5 and 10, in one or more examples, the system 100 includes at least one fastener 138. The fastener 138 is configured to secure the base 114 and the cover 116 together. The fastener 138 is configured to hold the case 110 in a closed configuration. As an example, the fastener 138 is configured to hold the cover 116 against the base 114 or otherwise secure the base 114 and the cover 116 together during the fabrication process after the workpiece 200 and the expandable medium 120 are loaded within the interior volume 112 of the case 110. The fastener 138 includes any suitable mechanism capable of fixing the case 110 in the closed configuration. In one or more examples, the fastener 138 includes at least one clamp configured to fasten or fixes the cover 116 in place relative to the base 114 or the sides 118. The clamp can include any suitable type of clamping device and fastening device, such as, but not limited to, mechanical clamps, magnetic clamps, pneumatic clamps, spring clamps, latches, pins, fasteners, weights, and the like. The fastener 138 can include any number of clamps.

As illustrated in Fig. 1, in one or more examples, the system 100 includes at least one a pressure sensor 162. The pressure sensor 162 is configured for detecting the pressure 104 within the interior volume 112. In one or more examples, the pressure sensor 162 facilitates monitoring the pressure 104 of the interior volume 112 within the case 110 and, thus, the positive pressure 102 or omni-directional force being applied to the workpiece 200 by the expandable medium 120 during and after expansion of the expandable medium 120. In one or more examples, the pressure sensor 162 also serves as a failsafe that limits the pressure 104 within the case 110. In one or more examples, the pressure sensor 162 generates an indication (e.g., alarm) upon the pressure 104 within the interior volume 112 exceeding a predetermined threshold. In one or more examples, the pressure sensor 162 provides real-time pressure detection and failsafe functions. In one or more examples, if a detected value (e.g., magnitude) of the pressure is higher than an alarming or threshold pressure, the system 100 is configured to initiate an automatic shut off, along with other safety measures, such as forced air cooling, release of interior pressure, and opening the case 110. In these examples, the pressure sensor 162 can include any suitable type or number of sensors, such as, but not limited to, a pressure sensor, a load sensor, a strain gauge, other sensor device, and combinations thereof.

As illustrated in Fig. 1, in one or more examples, the system 100 includes at least one shear pin 164. The shear pin 164 is configured to fail upon the pressure 104 within the interior volume 112 exceeding a predetermined threshold. In one or more examples, the shear pin 164 includes or takes the form of a failsafe mechanism configured to prevent over pressurization and/or to regulate the pressure within the interior volume 112 of the case 110. As an example, the shear pin 164 is used to couple the cover 116 to the base 114 in the closed position or to couple multiple segments or portions of the case 110 together. In one or more examples, the shear pin 164 is configured to fail upon a predetermined pressure that is greater than the pressure required or desired for the fabrication process, thereby relieving the pressure within the case 110. In one or more examples, the shear pin 164 is a sacrificial pin with a known failure strength, which corresponds to the alarming maximum allowable interior pressure. In these examples, if the shear pin 164 breaks, the system 100 will get into alarming mode. In other examples, the system 100 includes multiple layers of safety control.

In one or more examples, the fastener 138, the pressure sensor 162, and/or the shear pin 164 are integrated into a single component. As an example, the shear pin 164 can be used as the fastener 138 to secure the case 110 in the closed position (e.g., hold the base 114 and the cover 116 together). Optionally, the pressure sensor 162 can be used to detect the pressure 104 or load on the fastener 138 and/or the shear pin 164.

As illustrated in Fig. 1, in one or more examples, the system 100 includes at least one temperature sensor 166. The temperature sensor 166 is configured to detect a temperature of at least one of the expandable medium 120, the workpiece 200, and the interior volume 112.

As illustrated in Fig. 1, in one or more examples, the system 100 includes a heater 142. The heater 142 is in thermal communication with the expandable medium 120. In one or more examples, the heater 142 is configured to heat the expandable medium 120 to an activation temperature in which the expandable medium 120 expands within the interior volume 112 to apply the positive pressure 102 to the workpiece 200. In one or more examples, the heater 142 is configured to heat the workpiece 200 to a desired processing (e.g., curing or bonding) temperature. In one or more examples, the heater 142 is an internal heater and is configured to be disposed within the interior volume 112 of the case 110 with the expandable medium 120. In one or more examples, the heater 142 is an external heater and is configured to be disposed outside of the case110. In one or more examples, the heater 142 is integrated in the case 110 and/or the expandable medium 120, for example, using smart susceptor heating elements. The heater 142 can take any suitable form or include any suitable heating device. In various examples in which the expandable medium 120 is thermally activated to expand, the case 110 can be heated externally. Alternatively, or in addition, the system 100 can include one or more heat-generating substances configured to heat the expandable medium 120 to a predetermined temperature at which the expandable medium 120 will expand.

As illustrated in Fig. 1, in one or more examples, the system 100 includes at least one battery 144. The battery 144 is configured to store electrical power. In one or more examples, the battery 144 provides electrical power to any electrical element or component of the system 100 such that the system 100 can be utilized in locations without readily available power or infrastructure.

As illustrated in Fig. 1, in one or more examples, the system 100 includes at least one solar collector 146. The solar collector 146 is configured to generate electrical power. In one or more examples, the one solar collector 146 is configured to charge the battery 144. In one or more examples, the one solar collector 146 provides electrical power to any electrical element or component of the system 100 such that the system 100 can be utilized in locations without readily available power or infrastructure.

In one or more examples, at least a portion of the case 110 is thermally reflective. In one or more examples, at least one of the sides 118, the cover 116, and/or the base 114 is thermally reflective. In one or more examples, at least a portion of an interior surface of the case 110 includes or is coated with a thermally reflective material. Thermal reflectivity facilitates improved heating of the expandable medium 120 to activate expansion of the expandable medium 120 during the fabrication process.

As illustrated in Fig. 1, in one or more examples, the system 100 includes a controller 170. In one or more examples, the controller 170 receives an input signal or data from the pressure sensor 162, the temperature sensor 166, the heater 142, and/or other sensors such that pressure 104 and/or temperature 106 within the case 110 can be monitored and, subsequently, increased or decreased as required to achieve and/or maintain a desired magnitude for the positive pressure 102 applied to the workpiece 200 by expansion of the expandable medium 120.

In one or more examples, the controller 170 includes or takes the form of a closed-loop controller or otherwise utilizes closed-loop control of the pressure 104 and/or temperature 106 within the case 110 and/or applied to the workpiece 200 during the processing operation. In one or more examples, the controller 170 uses real-time pressure measurements from the pressure sensor 162 and/or the temperature sensor 166 to control or adjust the pressure 104 and/or temperature 106 within the case 110 and/or applied to the workpiece 200.

In one or more examples, the controller 170 includes a computer or other data processing system that includes a processor 174, a memory 176, and program code 178 stored on the memory 176 and executable by the processor 174. In one or more examples, the controller 170 generates and provides operations instructions or commands to functional components of the system 100. In one or more examples, the controller 170 accepts user commands from an operator. In one or more examples, the system 100 includes a communication module 172. The communication module 172 is in communication with the processor 174 and/or forms a portion of the controller 170. The communication module 172 is configured to transmit data representing a condition within the interior volume 112, such as at least one of the pressure 104 and the temperature 106 within the interior volume 112. In these examples, the data representing the condition of the fabricating process can be displayed to the operator by the controller 170.

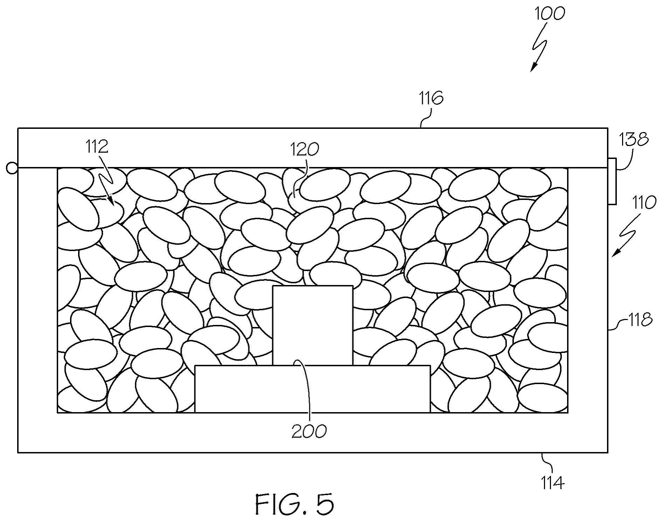

In one or more examples, prior to the processing, the expandable medium 120 is in an unexpanded state (e.g., Figs. 3, 4, 11, 13, 15 and 17). In the unexpanded (e.g., pre-expanded) state, the expandable medium 120 may be referred to as unexpanded or as an unexpanded element. During the fabrication process, the expandable medium 120 is caused to expand to an expanded state (e.g., Figs. 5, 8-10, 12, 14, 16, 18 and 19). In the expanded state, the expandable medium 120 may be referred to as expanded or as an expanded element. In one or more examples, in the expanded state, the expandable medium 120 applies pressure to interior surfaces of the case and to surface of the portion 202 of the workpiece 200. In one or more examples, the expanded expandable medium 120 applies the positive pressure 102 (resulting from the expansion of the expandable medium 120) to the workpiece 200 during some or all of the fabrication process to facilitate compression. In one or more examples, after the workpiece 200 has been bonded, the expandable medium 120 can be removed from the case 110 prior to, simultaneously with, or after the now fabricated condition of the workpiece 200 is removed from the case 110.

In one or more examples, the expandable medium 120 is configured to expand to an expanded volume 126 in response to a first predetermined change produced in an attribute 129 of the expandable medium 120. Upon expansion, the expandable medium 120 applies or exerts positive pressure 102 upon the workpiece 200 and the case 110. Generally, the expanded volume 126 is known or is capable of being calculated based on the material composition of the expandable medium 120, the attribute 129, and/or an activation temperature of the expandable medium 120. In one or more examples, the expanded volume 128 of the expandable medium 120 in the expanded state is greater than the interior volume 112 of the case 110. For the purpose of the present disclosure, the interior volume 112 refers to the actual available, fillable interior volume of the interior cavity of the case 110. In various examples, the expanded volume 126 is substantially the same as or marginally greater than the interior volume 112 defined by the case 110, the workpiece 200, and those other components situated within the case 110 such that, upon expansion of the expandable medium 120, the expandable medium 120 applies the positive pressure 102 to the workpiece 200, unless the interior volume 112 can be changed (e.g., by moving the sides 118, controlling the volumetrically variant element 192, and the like). In one or more examples, the amount (e.g., volume) of the expandable medium 120 in an unexpanded state to be loaded within the interior volume 112 of the case 110 is established by testing or models to predict the pressure during and after expansion within the constrained volume.

In one or more examples, the expandable medium 120 is configured to contract to a contracted volume 128 in response to a second predetermined change produced in the attribute 129 of the expandable medium 120. Upon contraction, the expandable medium 120 reduces or removes the positive pressure 102 applied the workpiece 200 and the case 110. Generally, the contracted volume 128 is known or is capable of being calculated based on the material composition of the expandable medium 120, the attribute 129, and/or an activation temperature of the expandable medium 120. In various examples, the contracted volume 128 of the expandable medium 120 is less than the expanded volume 126. In one or more examples, the contracted volume 128 is less than the expanded volume 126 but greater than the unexpanded (e.g., pre-expanded) volume of the expandable medium 120.

The expandable medium 120 can include any one or more of various suitable types of materials or material compositions, which is configured to expand and, optionally, contract, upon activation or in response to a change in at least one instance of the attribute 129. As illustrated, in one or more examples, the expandable medium 120 includes expandable pellets. In one or more examples, the expandable pellets are thermally activated at an activation temperature. In these examples, the expandable pellets are configured to expand when the temperature of the expandable pellets is raised up to the activation temperature. In one or more examples, the expandable pellets are chemically activated, for example, by application of the activating element 124. In one or more examples, any suitable number of the expandable pellets can be placed within the interior volume 112 of the case 110, provided that when expanded they are able to apply the positive pressure 102 to the workpiece 200 sufficient for the desired processing operation. The number of the expandable pellets is dependent upon the size of the interior volume 112. That is, where the case 110 fits more closely around the contours of the workpiece 200, the fewer number of the expandable pellets may be needed. In various examples, each one of the expandable pellets can have any suitable dimensions. In one or more examples, the length of the expandable pellets is less than approximately one centimeter. The expandable pellets can be substantially uniform in size or can include pellets of different sizes. In one or more examples, the expandable medium 120, such as the expandable pellets, includes or takes the form of foamable pellets. In one or more examples, the foamable pellets are configured to foam when heated to at least a predetermined foaming temperature (e.g., activation temperature). In one or more examples, the foamable pellets include a foamable material, such as a thermoplastic material treated with a blowing agent; a gas-filled balloon; hollow microspheres, a metal; any other suitable component configured to expand when heated, or any combination thereof.

In one or more examples, the expandable medium 120 is exothermic during expansion and/or contraction. In one or more examples, the expandable medium 120 is endothermic during expansion and/or contraction. In these examples, activation and, thus, expansion or contraction of the expandable medium 120 can be used to control the temperature 106 during fabrication (e.g., temperature of the workpiece 200, of the expandable medium 120, and/or within the case 110. In one or more examples, the expandable medium 120 is neither exothermic nor endothermic (e.g., no heat is released or absorbed) during expansion and/or contraction.

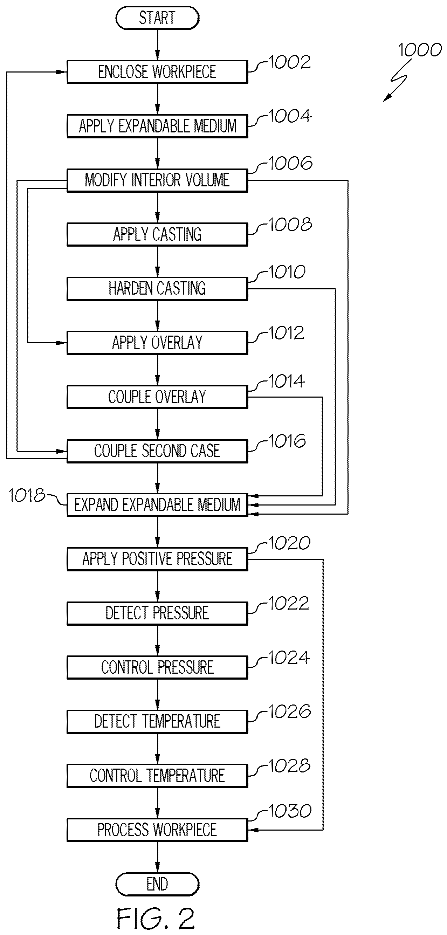

Referring now to Fig. 2, by way of examples, present disclosure is also directed to a method 1000 for fabricating the workpiece 200, also referred to herein as a portable fabrication method. The following are examples of the method 1000, according to the present disclosure. In one or more examples, the method 1000 is implemented using the system 100 (Fig. 1). Examples of the method 1000 include a number of elements, steps, operations, or processes. Not all of the elements, steps, operations, or processes described or illustrated in one example are required in that example. Some or all of the elements, steps, operations, or processes described or illustrated in one example can be combined with other examples in various ways without the need to include other elements, steps, operations, or processes described in those other examples, even though such combination or combinations are not explicitly described or illustrated by example herein.

In one or more examples, the method 1000 includes a step of enclosing 1002 at least the portion 202 of the workpiece 200 in the interior volume 112 of the case 110. The method 1000 includes a step of applying 1004 the expandable medium 120 in the interior volume 112 between the case 110 and at least the portion 202 of the workpiece 200. The method 1000 includes a step of expanding 1018 the expandable medium 120. The method 1000 includes a step of applying 1020 the positive pressure 102 to at least the portion 202 of the workpiece 200. The method 1000 includes a step of processing 1030 the workpiece 200 in response to applying the positive pressure 102.

In one or more examples, the method 1000 includes a step of modifying 1006 the interior volume 112. The interior volume 112 can be modified using any combination of arranging the sides 118 and/or utilization of one or more of the volumetrically variant element 192 and/or the one volumetrically invariant element 194.

In one or more examples, the method 1000 includes a step of applying 1008 the casting 134 over at least the portion 202 of the workpiece 200 and a step of hardening 1010 the casting 134. In one or more examples, the casting 134 and the portion of the case 110 form the interior volume 112. In one or more examples, the casting 134 is positioned over the workpiece 200 between the workpiece 200 and the expandable medium 120.

In one or more examples, the method 1000 includes a step of applying 1012 the overlay 136 over at least the portion 202 of the workpiece 200 and a step of coupling 1014 the overlay 136 to the case 110. In one or more examples, the overlay 136 and a portion of the case 110 form the interior volume 112.

In one or more examples, the method 1000 includes a step of coupling 1016 the second case 150 to the case 110 such that the interior volume 112 of the case 110 and the second interior volume 152 of the second case 150 are in volumetric communication. In these examples, the method 1000 includes the step of enclosing 1002 at least the second portion 204 of the workpiece 200 in the second interior volume 152 of the second case 150, the step of applying 1004 the expandable medium 120 in the second interior volume 152 between the second case 150 and at least the second portion 204 of the workpiece 200, the step of expanding 1018 the expandable medium 120, the step of applying 1020 the positive pressure 102 to at least the second portion 204 of the workpiece 200, and the step of processing 1030 the workpiece 200 in response to applying the positive pressure 102.

In one or more examples, the method 1000 includes a step of detecting 1022 the pressure 104 within the interior volume 112. In one or more examples, the pressure 104 is detected and/or monitored using the pressure sensor 162.

In one or more examples, the method 1000 includes a step of controlling 1024 the pressure 104 within the interior volume 112. In one or more examples, the pressure 104 is controlled by increasing or decreasing the interior volume 112 of the case 110, such as by selectively changing the position of one or more of the sides 118 of the case 110. In one or more examples, the pressure 104 is controlled by selectively expanding or contracting the expandable medium 120 within the interior volume 112. In one or more examples, the pressure 104 is controlled by selectively expanding or contracting the volumetrically variant element 192 also situated within the interior volume 112 and/or by inserting or removing the volumetrically invariant element 194 within the interior volume 112.

In one or more examples, expansion and/or contraction of the expandable medium 120 is selectively controllable. For example, the expandable medium 120 is configured to selectively or controllably expand and contract as a method for controlling the pressure within the case 110 and/or applied to the workpiece 200 during processing. In various examples, expansion and/or contraction of the expandable medium 120 can be controlled in any one of various ways, such as applying heat or cooling the expandable medium 120.

In one or more examples, the method 1000 includes a step of detecting 1026 the temperature 106 within the interior volume 112. In one or more examples, the temperature 106 is detected and/or monitored using the temperature sensor 166.

In one or more examples, the method 1000 includes a step of controlling 1028 the temperature 106 within the interior volume 112. In one or more examples, the temperature 106 can be controlled by using any combination of the heater 142 and/or exothermic and/or endothermic properties of the expandable medium 120.

Examples of the system 100 and method 1000 utilize expandable materials for composite structural bonding and debulking, such as secondary bonding, with or without adhesive, such as for composite bonding under pressure (e.g., co-bonding), where at least one component of a bonded structure is pre-cured. Additionally, examples of the system 100 and method 1000 enable bonding of non-composite materials (e.g., metal, metallic alloy, ceramic, polymer, hybrid, metal matrix composites (MMC), ceramic matrix composites (CMC), polymer matrix composites (PMC), etc.) by using epoxy adhesive or any polymer adhesive (e.g., thermoset or thermoplastic).

In one or more examples, the step of processing 1030 includes the step of curing the workpiece 200. In one or more examples, the step of processing 1030 includes a step of bonding the workpiece 200. In one or more examples, the step of bonding includes or takes the form of co-curing the workpiece 200. In one or more examples, the step of bonding includes or takes the form of co-bonding the workpiece 200. In one or more examples, the step of bonding includes or takes the form of secondarily bonding the workpiece 200.

In one or more examples, the system 100 and method 1000 facilitate co-curing to bond the workpiece 200 together. In these examples, the materials 210 of the workpiece 200 (e.g., first material 212 and second material 214) include an uncured composite material. In one or more examples, the uncured composite material is a thermoset composite material. In one or more examples, the uncured composite material is a thermoplastic composite material. In one or more examples, co-curing is achieved without adhesives. As an example, the workpiece 200 includes a first wet pre-preg cross-ply (e.g., first material 212) and a second wet pre-preg cross-ply (e.g., second material 214). In one or more examples, co-curing is achieved within an adhesive, such as an adhesive film. As an example, the workpiece 200 includes a first wet pre-preg cross-ply (e.g., first material 212), a second wet pre-preg cross-ply (e.g., second material 214), and an adhesive (e.g., third material) that is situated or disposed between the first and second wet pre-preg cross-plies. In one or more of the co-curing examples, the uncured composite material (e.g., thermoset composite material) has a cure temperature and a cure pressure. The expandable medium 120 is configured to expand when the temperature of the expandable medium 120 is raised to an activation temperature that is up to the cure temperature of the thermoset composite material. At the activation temperature, the expandable medium is configured to expand such that the positive pressure 102 is up to or at least the cure pressure. In one or more the co-curing examples, the uncured composite material (e.g., thermoplastic composite material) has a consolidation temperature and a consolidation pressure. The expandable medium 120 is configured to expand when the temperature of the expandable medium 120 is raised to the activation temperature that is up to the consolidation temperature of the thermoplastic composite material. At the activation temperature, the expandable medium 120 is configured to expand such that the positive pressure 102 is up to the cure pressure.

In one or more examples, the system 100 and method 1000 facilitate co-bonding to bond the workpiece 200 together. In these examples, at least one of the materials 210 of the workpiece 200 (e.g., first material 212) includes a cured composite material. At least another one of the materials 210 of the workpiece 200 (e.g., second material 214) includes the uncured composite material. In one or more examples, the uncured composite material is a thermoset composite material. In one or more examples, the uncured composite material is a thermoplastic composite material. In one or more examples, co-bonding is achieved with an adhesive, such as an adhesive film. As an example, the workpiece 200 includes a pre-cured laminate (e.g., first material 212), a wet pre-preg cross-ply (e.g., second material 214), and an adhesive (e.g., third material) that is situated or disposed between the pre-cured laminate and the wet pre-preg cross-ply. In one or more of the co-bonding examples, the uncured composite material (e.g., thermoset composite material) has the cure temperature and the cure pressure. The expandable medium 120 is configured to expand when the expandable medium 120 is raised to the activation temperature that is up to the cure temperature. At the activation temperature, the expandable medium 120 is configured to expand such that the positive pressure 102 is up to the cure pressure. In one or more of the co-bonding examples, the uncured composite material (e.g., thermoplastic composite material) has the consolidation temperature and the consolidation pressure. The expandable medium 120 is configured to expand when the temperature of the expandable medium 120 is raised to the activation temperature that is up to the consolidation temperature. At the activation temperature, the expandable medium is configured to expand such that the positive pressure 102 is up to the consolidation pressure.

In one or more examples, the system 100 and method 1000 facilitate secondary bonding to bond the workpiece 200 together. In these examples, the materials 210 of the workpiece 200 (e.g., first material 212 and second material 214) include any suitable materials or material combinations, such as, but not limited to, metallic materials, metallic alloy materials, ceramic materials, polymer materials, hybrid materials, metal matrix composite materials, ceramic matrix composite materials, polymer matrix composite materials, and the like. In one or more examples, secondary bonding is achieved with an adhesive, such as an adhesive film. As an example, the workpiece 200 includes a first pre-cured laminate or material layer (e.g., first material 212), a second pre-cured laminate or material layer (e.g., second material 214), and an adhesive (e.g., third material) that is situated or disposed between the first and second pre-cured laminates or material layers. In one or more examples, the adhesive is situated between the first material 212 and the second material 214. In these examples, the system 100, utilizing the adhesive, enables secondary bonding, co-bonding, or co-curing with adhesives of the first material 212 and the second material 214. In one or more of the co-curing examples, co-bonding examples, and/or secondary bonding examples, the adhesive has at least one of the cure temperature and the cure pressure. The expandable medium 120 is configured to expand when the temperature of the expandable medium 120 is raised to the activation temperature that up to the cure temperature. At the activation temperature, the expandable medium 120 is configured to expand such that the positive pressure 102 is up to the cure pressure. In one or more examples, the cure temperature and/or the cure pressure of the uncured composite material and the adhesive are at least approximately the same. In one or more examples, the cure temperature and/or the cure pressure of the uncured composite material and the adhesive are different.

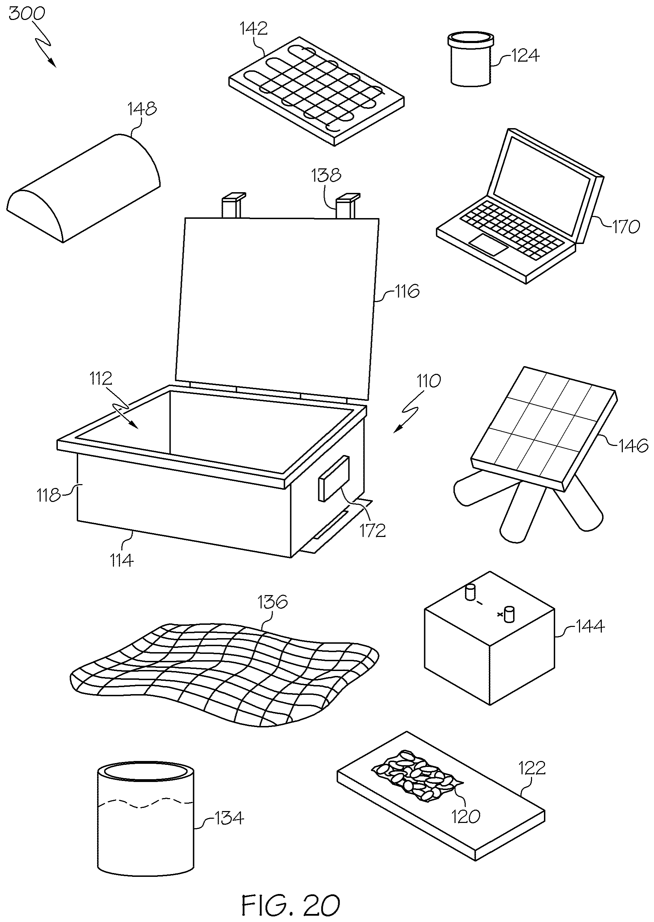

Referring now to Fig. 1 and 3-20, by way of examples, the present disclosure is additionally directed to the portable fabrication kit 300. The following are examples of the portable fabrication kit 300, according to the present disclosure. Examples of the portable fabrication kit 300 include a number of elements, features, and components. In one or more examples, the portable fabrication kit 300 is an implementation or embodiment of the system 100 (Fig. 1). In one or more examples, the portable fabrication kit 300 is implemented or used according to the method 1000 (Fig. 2). Not all of the elements, features, and/or components described or illustrated in one example are required in that example. Some or all of the elements, features, and/or components described or illustrated in one example can be combined with other examples in various ways without the need to include other elements, features, and/or components described in those other examples, even though such combination or combinations are not explicitly described or illustrated by example herein.

As illustrated in Figs. 1 and 3-20, in one or more examples, the portable fabrication kit 300 includes the case 110. The case 110 includes or forms the interior volume 112. The case 110 is configured for enclosing at least the portion 202 of the workpiece 200 to be fabricated. The portable fabrication kit 300 includes the expandable medium 120. The expandable medium 120 is configured to be applied in the interior volume 112 between the case 110 and at least the portion of the workpiece 200. The expandable medium 120 is configured to expand for applying the positive pressure 102 to at least the portion 202 of the workpiece 200 enclosed by the case 110.

In one or more examples of the portable fabrication kit 300, the case 110 includes the base 114, the cover 116, and the plurality of sides 118 that extend between the base 114 and the cover 116. In one or more examples, the base 114, the cover 116, and the sides 118 form the interior volume 112. In one or more examples, at least one of the sides 118 is movable relative to the base 114 and the cover 116 to selectively modify the interior volume 112.

In one or more examples of the portable fabrication kit 300, at least one of the sides 118 includes the opening 130. The opening 130 is configured to receive at least the portion 202 of the workpiece 200. In one or more examples of the portable fabrication kit 300, the case 110 includes the cap 132. The cap 132 is configured to cover the opening 130 and constrain the expandable medium 120 in the interior volume 112. In one or mor examples, the cap 132 is configured to conform to the workpiece 200 situated in the opening 130.

In one or more examples, the portable fabrication kit 300 includes the second case 150. The second case 150 includes or forms the second interior volume 152. The second case 150 is configured to be coupled to the case 110. The second case 150 is configured to enclose the second portion 204 of the workpiece 200. In these examples, the expandable medium 120 is configured to be applied in the second interior volume 152 between the second case 150 and at least the second portion 204 of the workpiece 200. The expandable medium 120 is configured to expand for applying the positive pressure 102 to at least the second portion 204 of the workpiece 200 enclosed by the second case 150.

In one or more examples, the portable fabrication kit 300 includes the casting 134. The casting 134 is configured to be applied and hardened over the expandable medium 120 and at least the portion 202 of the workpiece 200. In one or more examples, the portable fabrication kit 300 includes the overlay 136. The overlay 136 is configured to be draped over the expandable medium 120 and at least the portion 202 of the workpiece 200 and coupled to the case 110.

In other examples, the portable fabrication kit 300 includes any one or more of the various elements, features, and/or components of the system 100 or used during implementation of the method 1000. In one or more examples, the portable fabrication kit 300 also includes at least one or any combination of the forming tool 148, the heater 142, the battery 144, the solar collector 146, the encapsulating element 122, the volumetrically variant element 192, the volumetrically invariant element 194, the caul plate 196, the bagging 198, the temperature sensor 166, the pressure sensor 162, the fastener 138, the shear pin 164, the controller 170, the communication module 172, and any other suitable element, feature, and/or component.

For the purpose of the present disclosure, the term "expandable," "expand," "expanding," and similar terms refer to an ability to be expanded or having the potential or capability of increasing in size and/or volume. A substance or discrete element that is expandable may be capable of increasing in size or volume symmetrically or asymmetrically. Where the expandable substance is capable of symmetric expansion, the substance undergoes a substantially equivalent degree of expansion along each axis. Where the expandable substance exhibits asymmetric expansion, the substance can undergo a greater relative expansion along a first axis, or first and second axes, than along a different axis. In various examples, the expandable medium 120 is configured to expand when a predetermined change is produced in the expandable medium 120. The predetermined change is typically a change in a physical property or chemical property or a combination thereof, and/or any other suitable property of the expandable medium 120 that is associated with expansion of the expandable medium 120. Unless otherwise specified, expansion of the expandable medium 120 refers to an increase in the volume of the expandable medium 120, surface area of the expandable medium 120, and/or spatial extent of the expandable medium 120 in one or more dimensions. As an example, the expandable medium 120 can be configured to expand when the temperature of the expandable medium 120 is raised from a lower temperature, such as an ambient temperature, to a predetermined higher temperature (e.g., activation temperature). Accordingly, in cases in which fabrication of the workpiece 200 includes raising the temperature of the workpiece 200, the expandable medium 120 expands inside the interior volume 112 during the fabrication process. The expandable medium 120 (e.g., while expanding or after expanded) exerts pressure against the interior of the case 110 as well against or on the workpiece 200 during the bonding process.

For the purpose of the present disclosure, the term "contractable," "contract," "contracting," and similar terms refer to an ability to be contracted or having the potential or capability of decreasing in size and/or volume. A substance or discrete element that is contractable may be capable of decreasing in size or volume symmetrically or asymmetrically. Where the contractable substance is capable of symmetric contraction, the substance undergoes a substantially equivalent degree of contraction along each axis. Where the contractable substance exhibits asymmetric contraction, the substance can undergo a greater relative contraction along a first axis, or first and second axes, than along a different axis. In various examples, the expandable medium 120 is configured to contract when a predetermined change is produced in the expandable medium 120. The predetermined change is typically a change in a physical property or chemical property or a combination thereof, and/or any other suitable property of the expandable medium 120 that is associated with contraction of the expandable medium 120. Unless otherwise specified, contraction of the expandable medium 120 refers to a decrease in the volume of the expandable medium 120, surface area of the expandable medium 120, and/or spatial extent of the expandable medium 120 in one or more dimensions. As an example, the expandable medium 120 can be configured to decrease when the temperature of the expandable medium 120 is lowered from a higher temperature to a predetermined lower temperature.

In one or more examples, the expandable medium 120 is selected so that upon expansion within the interior volume 112 of the case 110, the expandable medium 120 exerts sufficient pressure to effectively compact the materials 210 of the workpiece 200 for proper curing or bonding. For some materials 210, an applied pressure of less than 1 atmosphere can be sufficient for bonding, while other materials 210 can be more effectively bonded at an applied pressure of 1 atmosphere or greater. In one or more examples, the expandable medium 120 is selected to exert sufficient pressure so that pressures can be applied that have typically previously required an autoclave (e.g., 1-5 atmospheres).

In one or more examples, the expandable medium 120 includes one or more different types, kinds, or compositions of expandable materials (e.g., different types or compositions of the expandable pellets). In these examples, each one of the different types of expandable materials is configured to expand and/or contract (e.g., to a predetermined volume) when heated to a predetermined temperature. In one or more examples, the composition of the different types of expandable medium 120 (e.g., different types of the expandable pellets) can be designed to achieve a desired relationship between the expanded volume of each of the types and the temperature of each of the types as a function of time. In one or more examples, the extent of the expansion of a given type or composition of the expandable medium 120 (e.g., expandable pellets) can be measured and recorded, as can the forces generated by the expansion. The formulation of the composition can therefore be varied in order to obtain a desired degree of expansion and expansion force. In this way, the amount of expandable medium 120 and/or the composition of the expandable medium 120 employed can be selected such that expansion and/or contraction within a known enclosed volume (e.g., interior volume 112) will apply a desired pressure upon the workpiece 200 at one or more stages of the fabrication process.

The expandable medium 120 can take any suitable form. In one or more examples, the expandable medium 120 is added to within the case 110, for example, as pellets, beads, grains, powder, or foam. Alternatively, or in addition, the expandable medium 120 is added to the case 110 as discrete portions of a solid or semi-solid, such as layers of the expandable medium 120 that can be draped across the portion 202 of the workpiece 200. Layers of the expandable medium 120 can be added by adding individual instances of the encapsulating element 122 (e.g., sacks or bags) filled with pellets, beads, or other smaller portions of the expandable medium 120. Although Figs. 3-5 and 8-19 depict the expandable medium 120 as a plurality of the expandable pellets, this is a representative depiction and should not be considered to limit the structure or configuration of the expandable medium 120. In various examples, the expandable medium 120 is added to the interior volume 112 of the case 110 while in the unexpanded state. As illustrated, prior to and/or during the fabrication process, the expandable medium 120 is made to expand (e.g., to increase in volume) to at least partially fill the interior volume 112, such that the expandable medium 120 (in the expanded state) applies positive pressure 102 directly or indirectly to at least some surfaces of the case 110 (or the casting 134 or overlay 136) as well as at least some surface (e.g., outer surfaces) of the workpiece 200. The pressure exerted by the expandable medium 120 as it expands thereby helps to compress and consolidate the portion 202 of the workpiece 200 as it is processed. In various examples, the expandable medium 120 is configured to expand (e.g., to a predetermined volume and/or pressure) when a predetermined change is produced in an attribute 129 of the expandable medium 120 (e.g., in the unexpanded state). In one or more examples, the expandable medium 120 is applied (e.g., inserted or added) within the interior volume 112 of the case 110 in the unexpanded state. The predetermined change is produced in the attribute 129 of the expandable medium 120 in the unexpanded condition, while the expandable medium 120 (in the unexpanded condition) is within the interior volume 112. The expandable medium 120 expands in response to the produced predetermined change. The attribute 129 of the expandable medium 120 can be a physical and/or chemical attribute. In one or more examples, the expandable medium 120 is configured to expand in volume when it interacts with water. As an example, the expandable medium 120 is or includes a desiccant, the desiccant can increase in volume as water is absorbed. For example, anhydrous calcium sulfate (anhydrite) exhibits an increase in volume of approximately sixty one percent (61%) when it absorbs water to form gypsum. In these examples, water can be added to the expandable medium 120 directly, such as by adding liquid water or water vapor to the interior of the case 110. Alternatively, or in addition, water or water vapor can be generated within the case 110 itself, for example by an appropriate chemical reaction. In one or more examples, the predetermined change in the attribute 129 of the expandable medium 120 includes a change in the temperature of expandable medium 120 and/or the temperature of one or more portions of the expandable medium 120. Accordingly, producing the predetermined change in the attribute 129 of expandable medium 120 can include raising the temperature of the unexpanded expandable element from a lower temperature, such as an ambient temperature (e.g., room temperature), to at least a predetermined temperature greater than the initial or ambient temperature (e.g., the predetermined temperature is a number of degrees above the ambient temperature suitable to produce a predetermined expansion of the expandable element). The expandable element then undergoes thermal expansion as a result of the increase in temperature. In one or more examples, the expandable medium 120 is a thermally activated expandable element. In these examples, the thermally activated expandable element is configured to expand when the temperature of the expandable medium 120 is raised to at least a predetermined temperature. Alternatively, or in addition, expanding the expandable medium 120 by heating the expandable medium 120 to at least a predetermined temperature produces a predetermined pressure against the workpiece 200. Typically, the predetermined pressure is a pressure sufficient to adequately cure the composite material. In one or more examples, the predetermined change produced in the attribute 129 of the expandable medium 120 is a combination of two or more properties of the expandable medium 120, such as a ratio or a product of quantitative values associated with properties of the expandable medium 120, such as two materials that have different coefficients of thermal expansion. In various examples, the process of fabricating the workpiece 200 includes producing the predetermined change in the attribute 129 of the expandable medium 120. In one or more examples, expansion of the expandable medium 120 occurs automatically during the fabricating process. For example, the attribute 129 can be a temperature of the expandable medium 120, and heat that is applied during the fabricating process produces the predetermined change in the temperature of the expandable medium 120. That is, heat applied to the workpiece 200 during the bonding process raises the temperature of the expandable medium 120 to at least a predetermined temperature associated with a desired volume and/or desired increase in volume. One or more properties of the expandable medium 120 can be designed such that the temperature change induced in the expandable medium 120 during fabrication of the workpiece 200 causes the expandable medium 120 to expand a desired predetermined amount as a result of thermal expansion. Alternatively, or additionally, causing the expandable medium 120 to expand can require additional steps beyond those required to cure the workpiece 200. As an example, causing the expandable medium 120 to expand can include applying an electric field, injecting a liquid, gas, and/or another suitable material, and/or inducing any other suitable change in the expandable medium 120. In various examples, the expandable medium 120 is thermally expandable and includes any material capable of undergoing expansion when the predetermined temperature is reached. In a particular example, a family of plastic polymers capable of softening when heated are called thermoplastic materials. When heated above its glass transition temperature and below its melting point, a solid thermoplastic material softens, becoming a viscous liquid. In this state, thermoplastics can be reshaped, and more specifically, can be expanded. A variety of classes of thermoplastic materials are known, including acrylic polymers, acrylonitrile butadiene styrene (ABS) polymers, nylon polymers, polylactic acid (PLA) polymers, polybenzimidazole polymers, polycarbonate polymers, polyether sulfone (PES) polymers, polyetherimide (PEI) polymers, polyethylene (PE) polymers, polyphenylene oxide (PPO) polymers, polyphenylene sulfide (PPS) polymers, polyvinyl chloride (PVC) polymers, polyvinylidene fluoride (PVDF) polymers, and polytetrafluoroethylene (PTFE) polymers, among others. In particular, the expandable medium 120 that includes acrylonitrile butadiene styrene (ABS) polymers can exhibit favorable physical properties when used in conjunction with the examples described herein. In one or more examples, the expandable medium 120 (e.g., the expandable pellets) can additionally include a blowing agent. The blowing agent is selected so that, when heated to at least a predetermined temperature, it forms a plurality of holes, pockets, or voids within the material of the expandable medium 120, such that the volume of the expandable medium 120 increases. As an example, an appropriate blowing agent can be an inert gas that is permeated into the expandable medium 120 under pressure. Such a blowing agent can be configured to expand in a plurality of locations within the expandable medium 120 when the temperature of the expandable medium 120 is increased from an ambient or initial temperature to a predetermined higher temperature, and the expanded gas forms holes, pockets, or voids within the pellet. A blowing agent, if present, can be applied to the expandable medium 120 prior to heating. In examples in which the expandable medium 120 includes a blowing agent, the blowing agent can be any appropriate substance capable of producing the desired degree of expansion. The blowing agent may include a physical blowing agent such as a chlorofluorocarbon, a hydrochlorofluorocarbon, a hydrocarbon, or liquid CO2, among others. Alternatively, or in addition, the blowing agent may include a chemical blowing agent selected to react with one or more components of the expandable medium 120, such as isocyanate and water for polyurethane, azodicarbonamide for vinyl, hydrazine and other nitrogen-based materials for thermoplastic and elastomeric foams, and sodium bicarbonate for thermoplastic foams, among others. In examples in which the expandable medium 120 includes a blowing agent, the blowing agent can include a foaming agent. In these examples, the blowing agent can be selected to form a gas, the foaming agent can be a material that facilitates formation of a foam, such as for example, a surfactant. Suitable foaming agents can include sodium laureth sulfate, sodium lauryl ether sulfate (SLES), sodium lauryl sulfate (also known as sodium dodecyl sulfate or SDS), and ammonium lauryl sulfate (ALS), among others. During the process of fabricating the workpiece 200, the expandable medium 120 is made to expand from the unexpanded state to the expanded state. In one or more examples, the expandable medium 120 is configured to expand in response to heat applied during curing or bonding. The expandable medium 120 expands to fill the interior volume 112 of the case 110, such that expansion of the expandable medium 120 applies positive pressure to workpiece 200. In one or more examples, the expandable medium 120 are configured (e.g., formulated) so that it is at least partially deformable after, during, and/or before expansion. A degree of deformability allows the expandable medium 120 to squeeze into small gaps that might otherwise exist, for example, between pellets, between pellets and inner surfaces of the case 110, and/or between pellets and the workpiece 200. Filling such gaps allows the expandable medium 120 to present a substantially smooth surface to the workpiece 200. In various examples, after the portion 202 of the workpiece 200 has been fabricated, the case 110 can be unsealed, or opened, as needed, and the expandable medium 120 can be removed. Although the expandable medium 120 is typically readily removable after the workpiece 200 has been fabricated, in some instances, the expandable medium 120 may remain expanded and tightly packed after the workpiece 200 has been processed and cooled, which may tend to impede removal. In such cases, the expandable medium 120 can be additionally configured in one or more ways to be more easily separated from the workpiece 200 and the case 110. As an example, the expandable medium 120 can be configured so that the shape and/or size can be changed when desired, such that that it can be more readily extracted. For example, the expandable medium 120 can be configured to shrink when cooled, so that after the workpiece 200 is processed and cooled, the expandable medium 120 shrinks in the interior volume 112, thereby facilitating their removal. In one or more examples, the expandable medium 120 is modified to minimize sintering (self-adhesion) upon heating and expansion. Alternatively, or in addition, the expandable medium 120 is configured to minimize potential adhesion with surfaces, such as by coating the expandable pellets with a suitable agent configured to prevent adhesion and/or to facilitate separation. In one or more examples, a suitable agent for adding to the expandable medium 120 includes a lubricating agent. As an example, a lubricating agent can be added to the expandable pellets to decrease adhesion between the expandable pellets before and/or after volumetric expansion. A suitable lubricating agent is one that does not interfere with curing and/or bonding of the workpiece 200 and prevents the expandable pellets from substantially adhering to one another, to the case 110, or to the components of the workpiece 200. Suitable lubricating agents can include liquids, powders, or combinations thereof. When added as a powder, a suitable lubricating agent can include a nano-powder. Alternatively, or in addition, suitable lubricating agents can include silicon-based materials, fluorinated polymers, or other substantially inert substances. For example, a suitable lubricating agent can include polytetrafluoroethylene (PTFE) powder, PTFE nano-powder, silicone, perfluoropolyether (PFPE), perfluoroalkylether (PFAE), perfluoropolyalkylether (PFPAE), and/or the like. Such a lubricant can be applied to the expandable pellets before the expandable pellets are added into the case 110. Alternatively, or additionally, a suitable lubricant can be applied to the expandable pellets while they are disposed inside the case 110. Coating at least some of the expandable pellets with a suitable lubricant can include mixing the lubricant with the plurality of pellets and/or pouring the lubricant over the plurality of pellets. Additionally, or alternatively, at least a subset of the plurality of expandable pellets can be coated with a desired lubricant and then mixed in with a plurality of uncoated pellets. In one or more examples, crystallinity and/or semi-crystallinity along the outer surfaces of the expandable pellets can help to prevent the pellets from sintering to each other. In one or more examples, at least some of the expandable pellets are configured, such as by preprocessing, to have regions of crystallinity along outer surfaces of the pellets, such that adding the expandable medium 120 includes adding a plurality of the expandable pellets having surface regions of increased crystallinity in order to decrease adhesion between pellets before and/or after volumetric expansion of the expandable pellets. In one or more examples, the expandable pellets can be employed where outer surfaces of the pellets exhibit a high degree of crystallinity (e.g., a high percentage of the volume of regions of each pellet near the outer surface is crystalline). The crystallinity can be induced in the expandable pellets by controlling one or more factors including the material composition of the pellets, the production temperatures to which the pellets are heated during production, the times for which the pellet temperatures are maintained at the production temperatures during production, electric and/or magnetic fields applied during production, distribution of a blowing agent in the pellets, composition and/or concentration of blowing agent, and so on. The outer surfaces of the expandable pellets can be crystalline before foaming, during foaming, and/or after foaming.

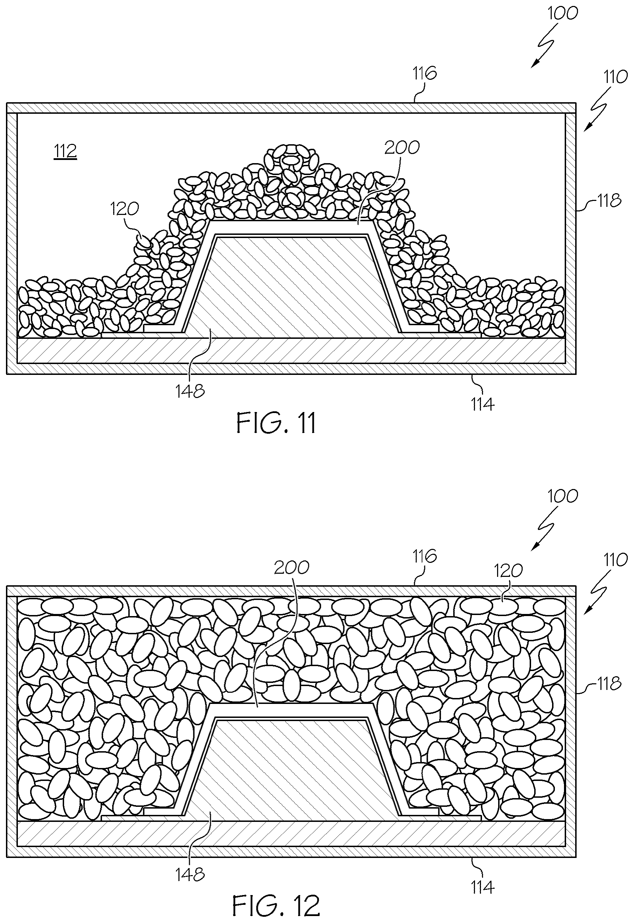

As illustrated in Figs. 1 and 11, in one or more examples, the system 100 includes additional elements configured to modify or moderate the pressure applied by the expandable medium 120, such as, but not limited to, one or more instances of the volumetrically invariant element 194 (e.g., a substantially noncompressible element), and/or one or more instances of the volumetrically variant element 192 (e.g., an expandable and contractible element), which can be increased in volume before or during fabrication and/or reduced in volume after fabrication.

For the purpose of the present disclosure, the term "hard" refers to a solid, firm, and/or non-expandable state. In some examples, the term "hard" includes rigid. Similarly, for the purpose of the present disclosure, the terms "harden," "hardening," and similar terms refer to the capability of the casting or casting material to transform from a flexible, moldable, pliable, flowable, conformable, and/or expandable state to a solid, firm, and/or non-expandable state. In some examples, upon hardening, the casting or casting material is also rigid.

In one or more examples, the casting 134 includes a casting material. In one or more examples, the casting material is configured to harden when a predetermined change is produced in an attribute of the casting material. As examples, the casting material can harden in response to a change in temperature, in time, in chemical composition, in pressure, or some other attribute of the material of the casting 134. As an example, the casting 134 is applied or formed over the portion 202 of the workpiece 200 before adding the expandable medium 120. As another example, the casting 134 is applied or formed over the portion 202 of the workpiece 200 and the expandable medium 120 after adding the expandable medium 120. In one or more examples, the casting 134 is configured to harden before or during the fabrication process. The casting 134 can be selected to be resistant to heat and to be readily removable after the workpiece 200 is cured. Examples of the casting material include, but are not limited to, plaster, cement, fiber (e.g., fiberglass) reinforced plastic, polyvinyl chloride, epoxy, rubber, thermoset or thermoplastic resin, composite, ceramic, and the like. In one or more examples, the casting material is thermally reflective or includes a thermally reflective material, liner, or layer. As an example, the casting 134 can include at least one thermally reflective film as one of the layers in the cast. The thermally reflective film can be an innermost layer, a middle or interior layer, and/or an outermost layer of the cast. Thermal reflectivity of the casting 134 facilitates improved heating of the expandable medium 120 to activate expansion of the expandable medium 120 during the fabrication process.

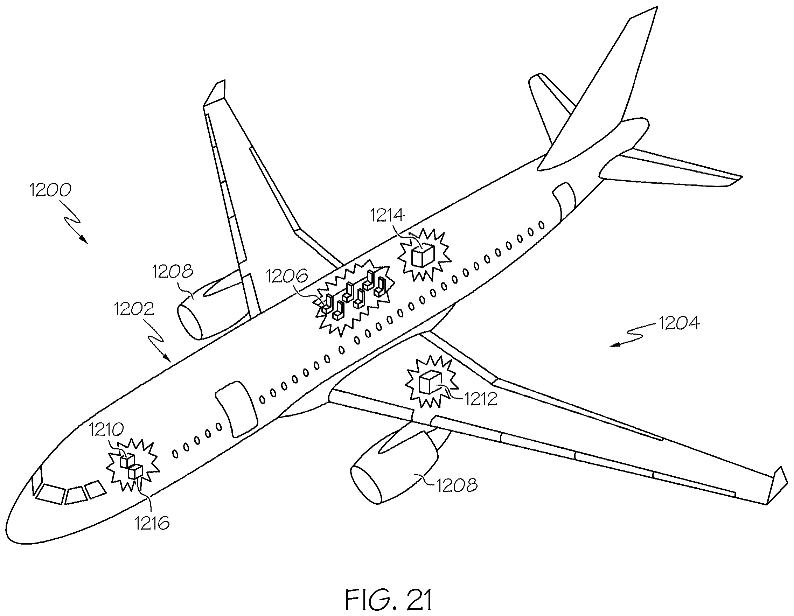

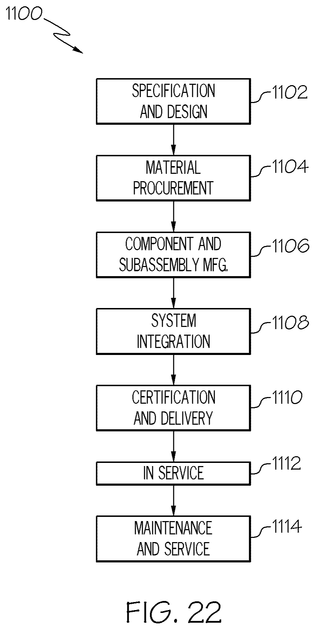

Referring now to Figs. 21 and 22 examples of the system 100, the method 1000, and the portable fabrication kit 300, described herein, may be related to, or used in the context of, the aircraft 1200, as schematically illustrated in Fig. 21, and the aerospace manufacturing and service method 1100, as shown in the flow diagram of Fig. 22. As an example, the aircraft 1200 and/or the manufacturing and service method 1100 may include or utilize a component, part, or workpiece that is fabricated or repaired using the system 100 or the kit 300 and/or according to the method 1000.

As illustrated in Fig. 21, in one or more examples, the aircraft 1200 can be any aerospace vehicle or platform. In one or more examples, the aircraft 1200 includes the airframe 1202 having the interior 1206. The aircraft 1200 includes a plurality of onboard systems 1204 (e.g., high-level systems). Examples of the onboard systems 1204 of the aircraft 1200 include propulsion systems 1208, hydraulic systems 1212, electrical systems 1210, and environmental systems 1214. In other examples, the onboard systems 1204 also includes one or more control systems coupled to the airframe 1202 of the aircraft 1200. In yet other examples, the onboard systems 1204 also include one or more other systems 1216, such as, but not limited to, communications systems, avionics systems, software distribution systems, network communications systems, passenger information/entertainment systems, guidance systems, radar systems, weapons systems, and the like. The aircraft 1200 can have any number of components or parts that are fabricated or repaired using the system 100 or the portable fabrication kit 300 and/or according to the method 1000.

As illustrated in Fig. 22, during pre-production of the aircraft 1200, the manufacturing and service method 1100 includes specification and design 1102 of the aircraft 1200 and material procurement 1104. During production of the aircraft 1200, component and subassembly manufacturing 1106 and system integration 1108 of the aircraft 1200 take place. Thereafter, the aircraft 1200 goes through certification and delivery 1110 to be placed in service 1112. Routine maintenance and service 1114 includes modification, reconfiguration, refurbishment, etc. of one or more systems of the aircraft 1200.

Each of the processes of the manufacturing and service method 1100 illustrated in Fig. 22 may be performed or carried out by a system integrator, a third party, and/or an operator (e.g., a customer). For the purposes of this description, a system integrator may include, without limitation, any number of aircraft manufacturers and major-system subcontractors; a third party may include, without limitation, any number of vendors, subcontractors, and suppliers; and an operator may be an airline, leasing company, military entity, service organization, and so on.

Examples of the system 100, the method 1000, and the portable fabrication kit 300, shown and described herein, may be employed during any one or more of the stages of the manufacturing and service method 1100 shown in the flow diagram illustrated by Fig. 22. In an example, components of the aircraft 1200 can be fabricated using the system 100 or kit 300 and/or according to the method 1000 during a portion of component and subassembly manufacturing 1106 and/or system integration 1108. Further, components of the aircraft 1200 can be fabricated and/or repaired using the system 100 or kit 300 and/or according to the method 1000 while the aircraft 1200 is in service 1112. Also, components of the aircraft 1200 can be fabricated and/or repaired using the system 100 or kit 300 and/or according to the method 1000 during system integration 1108 and certification and delivery 1110. Similarly, components of the aircraft 1200 can be fabricated and/or repaired using the system 100 or kit 300 and/or according to the method 1000 during maintenance and service 1114.

The preceding detailed description refers to the accompanying drawings, which illustrate specific examples described by the present disclosure. Other examples having different structures and operations do not depart from the scope of the present disclosure. Like reference numerals may refer to the same feature, element, or component in the different drawings. Throughout the present disclosure, any one of a plurality of items may be referred to individually as the item and a plurality of items may be referred to collectively as the items and may be referred to with like reference numerals. Moreover, as used herein, a feature, element, component, or step preceded with the word "a" or "an" should be understood as not excluding a plurality of features, elements, components, or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic, and/or operational step described in connection with the example is included in at least one aspect, embodiment, and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

Unless otherwise indicated, the terms "first," "second," "third," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, the phrase "at least one of," when used with a list of items, means different combinations of one or more of the listed items may be used and only one of each item in the list may be needed. For example, "at least one of item A, item B, and item C" may include, without limitation, item A or item A and item B. This example also may include item A, item B, and item C, or item B and item C. In other examples, "at least one of" may be, for example, without limitation, two of item A, one of item B, and ten of item C; four of item B and seven of item C; and other suitable combinations. As used herein, the term "and/or" and the "/" symbol includes any and all combinations of one or more of the associated listed items.

For the purpose of this disclosure, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represents a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

Figs. 1 and 3-21, referred to above, may represent functional elements, features, or components thereof and do not necessarily imply any particular structure. Accordingly, modifications, additions and/or omissions may be made to the illustrated structure. Additionally, those skilled in the art will appreciate that not all elements, features, and/or components described and illustrated in Figs. 1 and 3-21, referred to above, need to be included in every example and not all elements, features, and/or components described herein are necessarily depicted in each illustrative example. Accordingly, some of the elements, features, and/or components described and illustrated in Figs. 1 and 3-21 may be combined in various ways without the need to include other features described and illustrated in Figs. 1 and 3-21, other drawing figures, and/or the accompanying disclosure, even though such combination or combinations are not explicitly illustrated herein. Similarly, additional features not limited to the examples presented, may be combined with some or all of the features shown and described herein. Unless otherwise explicitly stated, the schematic illustrations of the examples depicted in Figs. 1 and 3-21, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features, and/or components that serve a similar, or at least substantially similar, purpose are labeled with like numbers in each of Figs. 1 and 3-21, and such elements, features, and/or components may not be discussed in detail herein with reference to each of Figs. 1 and 3-21. Similarly, all elements, features, and/or components may not be labeled in each of Figs. 1 and 3-21, but reference numerals associated therewith may be utilized herein for consistency.

In Figs. 2 and 22, referred to above, the blocks may represent operations, steps, and/or portions thereof and lines connecting the various blocks do not imply any particular order or dependency of the operations or portions thereof. It will be understood that not all dependencies among the various disclosed operations are necessarily represented. Figs. 2 and 22 and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all the operations described need to be performed.

Further, references throughout the present specification to features, advantages, or similar language used herein do not imply that all of the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages, and similar language used throughout the present disclosure may, but does not necessarily, refer to the same example.

The described features, advantages, and characteristics of one example may be combined in any suitable manner in one or more other examples. One skilled in the relevant art will recognize that the examples described herein may be practiced without one or more of the specific features or advantages of a particular example. In other instances, additional features and advantages may be recognized in certain examples that may not be present in all examples. Furthermore, although various examples of the system 100, the method 1000, and the portable fabrication kit 300 have been shown and described, modifications may occur to those skilled in the art upon reading the specification. The present application includes such modifications and is limited only by the scope of the claims.

The following numbered paragraphs disclose further aspects of the present invention.
1. A system for portable fabrication, the system comprising:
   a case comprising an interior volume and configured to enclose at least a portion of a workpiece to be fabricated; and
   an expandable medium disposed within the interior volume between the case and at least the portion of the workpiece, wherein the expandable medium is configured to expand within the case such that the expandable medium applies positive pressure to at least the portion of the workpiece enclosed by the case.
2. The system of 1, wherein at least a portion of the case is one of:
   rigid;
   flexible and non-expandable; and
   flexible and expandable.
3. The system of 1 or 2, wherein:
   the case further comprises:
      a base;
      a cover; and
      a plurality of sides extending between the base and the cover;
   the base, the cover, and the sides form the interior volume;
   the cover is movable relative to the base between an open state and closed state; and
   the case comprises a fastener configured to secure the base and the cover together.
4. The system of 3, wherein:
   at least one of the sides comprises an opening;
   the opening is configured to receive at least the portion of the workpiece;
   the case further comprises a cap configured to cover the opening and constrain the expandable medium in the interior volume; and
   the cap is configured to conform to the workpiece situated in the opening.
5. The system of 3 or 4, wherein at least one of the sides is movable relative to the base and the cover to selectively modify the interior volume.
6. The system of any one of 1 to 5, further comprising a second case comprising a second interior volume and configured to be coupled to the case and enclose a second portion of the workpiece,
   wherein:
   the expandable medium is further disposed within the second interior volume between the second case and the second portion of the workpiece; and
   a portion of the case and a second portion of the second case are removable to place the interior volume and the second interior volume in communication.
7. The system of any one of 1 to 6, further comprising at least one of:
   a casting configured to be applied and hardened over the expandable medium and at least the portion of the workpiece, wherein the casting and a portion of the case form the interior volume and the expandable medium is disposed within the interior volume between the casting and at least the portion of the workpiece;
   an overlay configured to be draped over the expandable medium and at least the portion of the workpiece and coupled to the case, wherein the overlay and a portion of the case form the interior volume and the expandable medium is disposed within the interior volume between the overlay and at least the portion of the workpiece;
   a forming tool configured to be situated in the interior volume and to support at least the portion of the workpiece;
   an encapsulating element configured to enclose at least a portion of the expandable medium, wherein the encapsulating element is disposed within the interior volume between the case and at least the portion of the workpiece;
   a volumetrically variant element disposed within the interior volume between the case and at least the portion of the workpiece;
   a volumetrically invariant element disposed within the interior volume between the case and at least the portion of the workpiece;
   a caul plate disposed in the interior volume between the expandable medium and at least the portion of the workpiece; and
   bagging disposed over at least the portion of the workpiece.
8. The system of any one of 1 to 7, further comprising an activating element configured to initiate expansion or contraction of the expandable medium in the interior volume.
9. The system of any one of 1 to 8, further comprising at least one of:
   a pressure sensor configured for detecting a pressure within the interior volume;
   a shear pin configured to fail upon the pressure within the interior volume exceeding a predetermined threshold;
   a heater in thermal communication with the expandable medium, wherein at least a portion of the case is thermally reflective;
   a temperature sensor configured to detect a temperature of at least one of the expandable medium, the workpiece, and the interior volume;
   a battery configured to store electrical power;
   a solar collector configured to generate electrical power; and
   a communication module configured to transmit a data representing a condition of at least one of a pressure and a temperature within the interior volume.
10. The system of any one of 1 to 9, wherein:
   the expandable medium is configured to expand to an expanded volume in response to a first predetermined change produced in an attribute of the expandable medium; and
   the expandable medium is configured to contract to a contracted volume in response to a second predetermined change produced in the attribute of the expandable medium.
11. The system of any one of 1 to 10, wherein the expandable medium is one of:
   exothermic during expansion; and
   endothermic during expansion.
12. A method for fabricating a workpiece, the method comprising:
   enclosing at least a portion of the workpiece in an interior volume of a case;
   applying an expandable medium in the interior volume between the case and at least the portion of the workpiece;
   expanding the expandable medium;
   applying a positive pressure to at least the portion of the workpiece; and
   processing the workpiece in response to applying the positive pressure.
13. The method of 12, further comprising one of:
   modifying the interior volume;
   applying a casting over at least the portion of the workpiece and hardening the casting such that the casting and a portion of the case form the interior volume; and
   applying an overlay over at least the portion of the workpiece and coupling the overlay to the case such that the overlay and a portion of the case form the interior volume.
14. The method of 12 or 13, further comprising:
   coupling a second case to the case such that the interior volume of the case and a second interior volume of the second case are in volumetric communication;
   enclosing at least a second portion of the workpiece in the second interior volume of the second case;
   applying the expandable medium in the second interior volume between the second case and at least the second portion of the workpiece;
   expanding the expandable medium;
   applying the positive pressure to at least the second portion of the workpiece; and
   processing the workpiece in response to applying the positive pressure.
15. The method of any one of 12 to 14, further comprising at least one of:
   detecting a pressure within the interior volume;
   controlling the pressure within the interior volume;
   detecting a temperature within the interior volume; and
   controlling the temperature within the interior volume.
16. The method of any one of 12 to 15, wherein:
   processing comprises one of bonding the workpiece or curing the workpiece; and
   bonding comprises one of co-curing the workpiece, co-bonding the workpiece, or secondarily bonding the workpiece.
17. A portable fabrication kit comprising:
   a case comprising an interior volume and configured for enclosing at least a portion of a workpiece to be fabricated; and
   an expandable medium,
   wherein:
      the expandable medium is configured to be applied in the interior volume between the case and at least the portion of the workpiece; and
      the expandable medium is configured to expand for applying a positive pressure to at least the portion of the workpiece enclosed by the case.
18. The portable fabrication kit of 17, wherein:
   the case further comprises:
      a base;
      a cover; and
      a plurality of sides extending between the base and the cover;
   the base, the cover, and the sides form the interior volume; and
   at least one of the sides is movable relative to the base and the cover to selectively modify the interior volume;
   at least one of the sides comprises an opening;
   the opening is configured to receive at least the portion of the workpiece;
   the case further comprises a cap configured to cover the opening and constrain the expandable medium in the interior volume; and
   the cap is configured to conform to the workpiece situated in the opening.
19. The portable fabrication kit of 17 or 18, further comprising a second case comprising a second interior volume and configured to be coupled to the case and enclose a second portion of the workpiece,
   wherein:
   the expandable medium is further configured to be applied in the second interior volume between the second case and at least the second portion of the workpiece; and
   the expandable medium is configured to expand for applying the positive pressure to at least the second portion of the workpiece enclosed by the second case.
20. The portable fabrication kit of any one of 17 to 19, further comprising at least one of:
   a casting configured to be applied and hardened over the expandable medium and at least the portion of the workpiece;
   an overlay configured to be draped over the expandable medium and at least the portion of the workpiece and coupled to the case;
   a forming tool configured to be situated in the interior volume and to support at least the portion of the workpiece;
   bagging disposed over at least the portion of the workpiece;
   a caul plate disposed in the interior volume between the expandable medium and at least the portion of the workpiece;
   a volumetrically variant element;
   a volumetrically invariant element;
   an activating element configured to initiate expansion or contraction of the expandable medium in the interior volume;
   an encapsulating element configured to enclose the expandable medium;
   a communication module configured to transmit a data representing a condition of at least one of a pressure and a temperature within the interior volume;
   a heater in thermal communication with the expandable medium;
   a pressure sensor configured for detecting a pressure within the interior volume;
   a temperature sensor configured to detect a temperature of at least one of the expandable medium, the workpiece, and the interior volume;
   a battery configured to store electrical power; and
   a solar collector configured to generate electrical power.

## Claims

1. A system (100) for portable fabrication, the system (100) comprising:
a case (110) comprising an interior volume (112) and configured to enclose at least a portion (202) of a workpiece (200) to be fabricated; and
an expandable medium (120) disposed within the interior volume (112) between the case (110) and at least the portion (202) of the workpiece (200), wherein the expandable medium (120) is configured to expand within the case (110) such that the expandable medium (120) applies positive pressure (102) to at least the portion (202) of the workpiece (200) enclosed by the case (110).

2. The system (100) of Claim 1, wherein at least a portion of the case (110) is one of:
rigid;
flexible and non-expandable; and
flexible and expandable.

3. The system (100) of Claim 1 or 2, wherein:
the case (110) further comprises:
a base (114);
a cover (116); and
a plurality of sides (118) extending between the base (114) and the cover (116);
the base (114), the cover (116), and the sides (118) form the interior volume (112);
the cover (116) is movable relative to the base (114) between an open state and closed state; and
the case (110) comprises a fastener (138) configured to secure the base (114) and the cover (116) together, optionally wherein
at least one of the sides (118) comprises an opening (130);
the opening (130) is configured to receive at least the portion (202) of the workpiece (200);
the case (110) further comprises a cap (132) configured to cover the opening (130) and constrain the expandable medium (120) in the interior volume (112); and
the cap (132) is configured to conform to the workpiece (200) situated in the opening (130), further optionally wherein
at least one of the sides (118) is movable relative to the base (114) and the cover (116) to selectively modify the interior volume (112).

4. The system (100) of any one of Claims 1 to 3, further comprising a second case (150) comprising a second interior volume (152) and configured to be coupled to the case (110) and enclose a second portion (204) of the workpiece (200),
wherein:
the expandable medium (120) is further disposed within the second interior volume (152) between the second case (150) and the second portion (204) of the workpiece (200); and
a portion of the case (110) and a second portion of the second case (150) are removable to place the interior volume (112) and the second interior volume (152) in communication.

5. The system (100) of any one of Claims 1 to 4, further comprising at least one of:
a casting (134) configured to be applied and hardened over the expandable medium (120) and at least the portion (202) of the workpiece (200), wherein the casting (134) and a portion of the case (110) form the interior volume (112) and the expandable medium (120) is disposed within the interior volume (112) between the casting (134) and at least the portion (202) of the workpiece (200);
an overlay (136) configured to be draped over the expandable medium (120) and at least the portion (202) of the workpiece (200) and coupled to the case (110), wherein the overlay (136) and a portion of the case (110) form the interior volume (112) and the expandable medium (120) is disposed within the interior volume (112) between the overlay (136) and at least the portion (202) of the workpiece (200);
a forming tool (148) configured to be situated in the interior volume (112) and to support at least the portion (202) of the workpiece (200);
an encapsulating element (122) configured to enclose at least a portion of the expandable medium (120), wherein the encapsulating element (122) is disposed within the interior volume (112) between the case (110) and at least the portion (202) of the workpiece (200);
a volumetrically variant element (192) disposed within the interior volume (112) between the case (110) and at least the portion (202) of the workpiece (200);
a volumetrically invariant element (194) disposed within the interior volume (112) between the case (110) and at least the portion (202) of the workpiece (200);
a caul plate (196) disposed in the interior volume (112) between the expandable medium (120) and at least the portion of the workpiece (200); and
bagging (198) disposed over at least the portion of the workpiece (200).

6. The system (100) of any one of Claims 1 to 5, further comprising an activating element (124) configured to initiate expansion or contraction of the expandable medium (120) in the interior volume (112).

7. The system (100) of any one of Claims 1 to 6, further comprising at least one of:
a pressure sensor (162) configured for detecting a pressure (104) within the interior volume (112);
a shear pin (164) configured to fail upon the pressure (104) within the interior volume (112) exceeding a predetermined threshold;
a heater (142) in thermal communication with the expandable medium (120), wherein at least a portion of the case (110) is thermally reflective;
a temperature sensor (166) configured to detect a temperature of at least one of the expandable medium (120), the workpiece (200), and the interior volume (112);
a battery (144) configured to store electrical power;
a solar collector (146) configured to generate electrical power; and
a communication module (172) configured to transmit a data representing a condition of at least one of a pressure (104) and a temperature (106) within the interior volume (112).

8. The system of any one of Claims 1 to 7, wherein:
the expandable medium (120) is configured to expand to an expanded volume (126) in response to a first predetermined change produced in an attribute (129) of the expandable medium (120); and
the expandable medium (120) is configured to contract to a contracted volume (126) in response to a second predetermined change produced in the attribute (129) of the expandable medium (120).

9. The system (100) of any one of Claims 1 to 8, wherein the expandable medium (120) is one of:
exothermic during expansion; and
endothermic during expansion.

10. A method (1000) for fabricating a workpiece (200), the method (1000) comprising:
enclosing at least a portion (202) of the workpiece (200) in an interior volume (112) of a case (110);
applying an expandable medium (120) in the interior volume (112) between the case (110) and at least the portion (202) of the workpiece (200);
expanding the expandable medium (120);
applying a positive pressure (102) to at least the portion (202) of the workpiece (200); and
processing the workpiece (200) in response to applying the positive pressure (102).

11. The method (1000) of Claim 10, further comprising one of:
modifying the interior volume (112);
applying a casting (134) over at least the portion (202) of the workpiece (200) and hardening the casting (134) such that the casting (134) and a portion of the case (110) form the interior volume (112); and
applying an overlay (136) over at least the portion (202) of the workpiece (200) and coupling the overlay (136) to the case (110) such that the overlay (136) and a portion of the case (110) form the interior volume (112), optionally wherein the method (1000) further comprises:
coupling a second case (150) to the case (110) such that the interior volume (112) of the case (110) and a second interior volume (152) of the second case (150) are in volumetric communication;
enclosing at least a second portion (204) of the workpiece (200) in the second interior volume (152) of the second case (150);
applying the expandable medium (120) in the second interior volume (152) between the second case (150) and at least the second portion (204) of the workpiece (200);
expanding the expandable medium (120);
applying the positive pressure (102) to at least the second portion (204) of the workpiece (200); and
processing the workpiece (200) in response to applying the positive pressure (102).

12. The method (1000) of Claim 10 or 11, further comprising at least one of:
detecting a pressure (104) within the interior volume (112);
controlling the pressure (104) within the interior volume (112);
detecting a temperature (106) within the interior volume (112); and
controlling the temperature (106) within the interior volume (112).

13. The method (1000) of any of Claims 10 to 12, wherein:
processing comprises one of bonding the workpiece (200) or curing the workpiece (200); and
bonding comprises one of co-curing the workpiece (200), co-bonding the workpiece (200), or secondarily bonding the workpiece (200).

14. A portable fabrication kit (300) comprising:
a case (110) comprising an interior volume (112) and configured for enclosing at least a portion (202) of a workpiece (200) to be fabricated; and
an expandable medium (120),
wherein:
the expandable medium (120) is configured to be applied in the interior volume (112) between the case (110) and at least the portion of the workpiece (200); and
the expandable medium (120) is configured to expand for applying a positive pressure (102) to at least the portion (202) of the workpiece (200) enclosed by the case (110).

15. The portable fabrication kit (300) of Claim 14, wherein:
the case (110) further comprises:
a base (114);
a cover (116); and
a plurality of sides (118) extending between the base (114) and the cover (116);
the base (114), the cover (116), and the sides (118) form the interior volume (112); and
at least one of the sides (118) is movable relative to the base (114) and the cover (116) to selectively modify the interior volume (112);
at least one of the sides (118) comprises an opening (130);
the opening (130) is configured to receive at least the portion (202) of the workpiece (200);
the case (110) further comprises a cap (132) configured to cover the opening (130) and constrain the expandable medium (120) in the interior volume (112); and
the cap (132) is configured to conform to the workpiece (200) situated in the opening (130), optionally wherein
the portable fabrication kit (300) further comprises a second case (150) comprising a second interior volume (152) and configured to be coupled to the case (110) and enclose a second portion (204) of the workpiece (200),
wherein:
the expandable medium (120) is further configured to be applied in the second interior volume (152) between the second case (150) and at least the second portion (204) of the workpiece (200); and
the expandable medium (120) is configured to expand for applying the positive pressure (102) to at least the second portion (204) of the workpiece (200) enclosed by the second case (150), further optionally wherein
the portable fabrication kit (300) further comprises at least one of:
a casting (134) configured to be applied and hardened over the expandable medium (120) and at least the portion (202) of the workpiece (200);
an overlay (136) configured to be draped over the expandable medium (120) and at least the portion (202) of the workpiece (200) and coupled to the case (110);
a forming tool (148) configured to be situated in the interior volume (112) and to support at least the portion (202) of the workpiece (200);
bagging (198) disposed over at least the portion of the workpiece (200);
a caul plate (196) disposed in the interior volume (112) between the expandable medium (120) and at least the portion of the workpiece (200);
a volumetrically variant element (192);
a volumetrically invariant element (194);
an activating element (124) configured to initiate expansion or contraction of the expandable medium (120) in the interior volume (112);
an encapsulating element (122) configured to enclose the expandable medium (120);
a communication module (172) configured to transmit a data representing a condition of at least one of a pressure (104) and a temperature (106) within the interior volume (112);
a heater (142) in thermal communication with the expandable medium (120);
a pressure sensor (162) configured for detecting a pressure (104) within the interior volume (112);
a temperature sensor (166) configured to detect a temperature of at least one of the expandable medium (120), the workpiece (200), and the interior volume (112);
a battery (144) configured to store electrical power; and
a solar collector (146) configured to generate electrical power.
